# EUROPEAN PATENT APPLICATION

(11) **EP 4 827 207 A1**
(43) Date of publication of application: **21.10.2026**
(21) Application number: 24910940.6
(22) Date of filing: 19.12.2024
(51) Int. Cl.: H04W 72/12

(54) **COMMUNICATION METHOD AND APPARATUS, AND READABLE STORAGE MEDIUM AND COMPUTER PROGRAM PRODUCT**

(30) Priority: 29.12.2023 CN 202311865395
(71) Applicant: Huawei Technologies Co., Ltd., Shenzhen, Guangdong 518129 (CN)
(72) Inventor: WANG, Xiaolu, Shenzhen, Guangdong 518129 (CN); LUO, Hejia, Shenzhen, Guangdong 518129 (CN); WANG, Jun, Shenzhen, Guangdong 518129 (CN)
(74) Representative: Gill Jennings & Every LLP
(86) International application number: PCT/CN2024/140757
(87) International publication number: WO 2025/140011

(57) **Abstract**

A communication method and apparatus, a readable storage medium, and a computer program product relate to the field of communication technologies, and are used to improve a success rate of forwarding information by a relay apparatus. In this application, the relay apparatus receives first information in a first time unit. The first information indicates a resource for information forwarded by the relay apparatus. The relay apparatus receives second information, and sends the second information in a second time unit. The second time unit is determined based on a first duration and the first time unit. The first duration is associated with a round-trip delay of signal transmission between the relay apparatus and a network apparatus. Therefore, a time unit that is determined by the relay apparatus and that is used to forward information is more reasonable, to further improve a success rate of forwarding information by using the relay apparatus in a satellite communication scenario. In addition, with deployment of the relay apparatus, a quantity of deployed gateways and terrestrial stations can be reduced, thereby reducing communication costs.

## Description

### CROSS-REFERENCE TO RELATED APPLICATIONS

This application claims priority to Chinese Patent Application No. 202311865395.7, filed with the China National Intellectual Property Administration on December 29, 2023 and entitled "COMMUNICATION METHOD AND APPARATUS, READABLE STORAGE MEDIUM, AND COMPUTER PROGRAM PRODUCT", which is incorporated herein by reference in its entirety.

### TECHNICAL FIELD

This application relates to the field of communication technologies, and in particular, to a communication method and apparatus, a readable storage medium, and a computer program product.

### BACKGROUND

Currently, a 5th generation mobile network (the 5th generation, 5G) new radio (new radio, NR) technology is evolving from Release R18 to Release R19. In addition, the NR technology also enters a commercial deployment phase from a standardization phase. The NR standard protocol is initially used for wireless communication technologies designed for terrestrial cellular network scenarios, and can provide users with wireless communication services featuring ultra-low latency, ultra-high reliability, ultra-high rates, and ultra-massive connectivity. Compared with terrestrial communication, non-terrestrial network (non-terrestrial network, NTN) communication has features such as a large coverage area and flexible networking, and can achieve seamless global network coverage. NTN communication includes networking by using devices such as an uncrewed aerial vehicle, a high-altitude platform, and a satellite, to provide services such as data transmission and voice communication for user equipment (user equipment, UE).

In a satellite communication system, a terminal apparatus in a satellite system may send data to a gateway (gateway) or a territorial station by using a satellite apparatus, to establish a connection to a core network or the internet. Costs are increased if a large quantity of gateways and a large quantity of territorial stations are deployed. How to reduce costs becomes an urgent problem to be resolved.

### SUMMARY

This application provides a communication method and apparatus, a readable storage medium, and a computer program product, so that a relay apparatus determines, based on a first duration, a time unit of to-be-forwarded information after receiving the to-be-forwarded information. In this solution, a success rate of forwarding information by the relay apparatus in a scenario of a relatively large transmission delay can be improved. In this solution, information can be transmitted by using the relay apparatus in a satellite communication scenario. Because relay apparatuses can be deployed in a satellite communication scenario, a quantity of gateways and a quantity of terrestrial stations can be reduced, thereby further reducing communication costs.

In the satellite communication scenario, the relay apparatus may include a satellite apparatus and/or a terrestrial station. For example, in a typical scenario, a transmission path between a terminal apparatus and a network apparatus includes at least two satellite apparatuses, and a terrestrial station is included between the two satellite apparatuses. In this way, signaling between the two satellite apparatuses may also be transmitted by using the terrestrial station (for example, one satellite apparatus transmits the signaling to the terrestrial station, and the terrestrial station transmits the signaling to the other satellite apparatus). This solution can reduce a load of a direct link between the two satellite apparatuses.

In the satellite communication scenario, a round-trip delay between the relay apparatus and the network apparatus is relatively large. In an information forwarding scenario, the network apparatus sends first information to the relay apparatus, and the relay apparatus determines, based on a time unit of the first information, a time unit of to-be-forwarded information. However, because there is a timing advance between an uplink frame boundary and a downlink frame boundary, and the timing advance is associated with the round-trip delay between the relay apparatus and the network apparatus, a value of the timing advance is usually relatively large. If a difference between the time unit of the first information and the time unit of the to-be-forwarded information is relatively small, a location of the time unit, determined by the relay apparatus, of the to-be-forwarded information is not suitable.

To resolve this problem, this application provides an implementation. In this implementation, the relay apparatus may determine, based on the first duration, the time unit of the to-be-forwarded information. The first duration is associated with the round-trip delay between the relay apparatus and the network apparatus. Therefore, the time unit, determined in this application, of the to-be-forwarded information is more appropriate, thereby improving a success rate of forwarding information by the relay apparatus in the satellite communication scenario.

According to a first aspect, an embodiment of this application provides a communication method. The method may be performed by a relay apparatus. The relay apparatus may be a satellite device or a chip (or a chip system) inside a satellite device, or may be a network device deployed on the ground or a chip (or a chip system) inside a network device.

In this application, the relay apparatus receives first information in a first time unit. The first information may come from a network apparatus. The first information indicates a resource for information sent by the relay apparatus. In this embodiment of this application, the "resource for information sent by the relay apparatus" may also include or be replaced with a "resource for information forwarded by the relay apparatus". It may also be understood that the first information indicates a resource for information forwarded by the relay apparatus. There are a plurality of possible transmission directions of the information forwarded by the relay apparatus. For ease of understanding, in some examples of this application, the information forwarded by the relay apparatus is uplink information. In this example, it may also be understood that the first information may indicate a resource for the uplink information forwarded by the relay apparatus. The relay apparatus receives information indicating the first duration. The first duration is associated with a round-trip delay of signal transmission between the relay apparatus and the network apparatus. The relay apparatus receives second information, and the relay apparatus sends the second information in a second time unit. The second time unit is determined based on the first duration and the first time unit.

In this application, after receiving the second information, the relay apparatus sends the second information. This may also be referred to as "the relay apparatus forwards the second information". "Forward" in this application may also be replaced with "send". The second information may be understood as information that needs to be forwarded by the relay apparatus. In this application, forwarding the second information by the relay apparatus may be transparent forwarding or regenerative forwarding. In this application, the second information received by the relay apparatus may come from a terminal apparatus or another relay apparatus, or may come from another apparatus, for example, from a network apparatus. The relay apparatus may send the second information to a network apparatus or another relay apparatus, or may send the second information to another apparatus, for example, send the second information to a terminal apparatus. For ease of understanding, in some examples in this embodiment of this application, description is provided by using an example in which the second information belongs to uplink information. When the second information belongs to uplink information, the second information received by the relay apparatus may come from a terminal apparatus or another relay apparatus, and the relay apparatus may send the second information to another relay apparatus or a network apparatus.

Because a location of a time unit used for forwarding information (that is, the location of the time unit used for forwarding the second information) is further determined based on the first duration, the first duration is associated with the round-trip delay of signal transmission between the relay apparatus and the network apparatus. Therefore, the time unit that is used for forwarding information and that is determined in this application is more appropriate, thereby improving a success rate of uplink transmission performed by using the relay apparatus in a satellite communication scenario.

In a possible implementation, the resource indicating the information sent by the relay apparatus (for example, the information forwarded by the relay apparatus) includes at least one of the following: information indicating a time domain start location of the second time unit; information indicating a length of a time domain resource occupied by the second time unit; and information indicating a frequency domain resource occupied by the information sent by the relay apparatus. In this way, the relay apparatus may determine, based on the first information, related information of the time unit used for sending the second information.

In a possible implementation, the first information further includes at least one of the following: indicating a sending address corresponding to the information sent by the relay apparatus (for example, the information forwarded by the relay apparatus); indicating a sending path corresponding to the information sent by the relay apparatus (for example, the information forwarded by the relay apparatus); indicating a sending direction corresponding to the information sent by the relay apparatus (for example, the information forwarded by the relay apparatus), where the sending direction includes an uplink transmission direction or a downlink transmission direction; indicating a sending manner of the information sent by the relay apparatus (for example, the information forwarded by the relay apparatus), where the sending manner includes transparent forwarding or regenerative forwarding; and indicating a frequency corresponding to the information sent by the relay apparatus (for example, the information forwarded by the relay apparatus). In this way, the relay apparatus may determine related content of the to-be-forwarded information based on the first information, and then forward the received information based on the content. This solution provides support for application of a relay apparatus in a satellite communication system, thereby improving a success rate of forwarding information by the relay apparatus.

In a possible implementation, the first duration is greater than or equal to a round-trip delay of signal transmission between the relay apparatus and the network apparatus. Because the first duration is greater than or equal to the round-trip delay of signal transmission between the relay apparatus and the network apparatus, the location of the time unit that is used for forwarding information and that is determined in this application is more appropriate, and the relay apparatus has sufficient time to set a timing offset. In this solution, a success rate of uplink transmission performed by using the relay apparatus in the satellite communication scenario can be improved.

In a possible implementation, the first duration may alternatively be less than a round-trip delay of signal transmission between the relay apparatus and the network apparatus. In this implementation, the relay apparatus may further determine the time unit used for forwarding the information based on the first duration, or the relay apparatus determines, based on another parameter and the first duration, the time unit used for forwarding the information. In this solution, the determined time unit can be more appropriate. In still another possible implementation, when the first duration is less than the round-trip delay of signal transmission between the relay apparatus and the network apparatus, a network apparatus side may perform timing compensation for uplink data, that is, delay reception of an uplink signal, and a frame boundary of the uplink data received by the network apparatus side is later than a frame boundary of downlink data.

In a possible implementation, the second time unit is further determined based on at least one of the following: a value of K and a time unit offset value. The value of K is associated with a delay of processing uplink information by the relay apparatus and/or a delay of processing downlink information by the relay apparatus; or the value of K is indicated by the network apparatus. The first information further indicates the time unit offset value. In this way, this solution can be better compatible with the conventional technologies. In this solution, a parameter range supported by the relay apparatus in a terrestrial scenario can be avoided from being modified (that is, the value of K or the time unit offset value can be avoided from being modified), and a terrestrial relay apparatus (in a small-delay scenario) is not required to have a capability of supporting a large-delay scenario, thereby avoiding increasing a capability of the terrestrial relay apparatus. In the solution provided in this embodiment of this application, only a capability of the relay apparatus in the large-delay scenario needs to be added.

In a possible implementation, a quantity of time units between the second time unit and a third time unit is determined based on a sum of the first duration, the value of K, and the time unit offset value. The third time unit is a time domain resource for uplink transmission, and an index value of the third time unit is equal to that of the first time unit. For example, if the first time unit is a slot n, the third time unit is also a slot n. The quantity of time units between the second time unit and the third time unit: the slot n may be determined based on the sum of the first duration, the value of K, and the time unit offset value.

In a possible implementation, the relay apparatus receives third information. The third information is used for determining an updated first duration. The updated first duration is used by the relay apparatus to determine a time unit of the sent information. The updated first duration is associated with the round-trip delay between the relay apparatus and the network apparatus. In this application, "the relay apparatus determines a time unit of sent information" may also be replaced with "the relay apparatus determines a time unit of forwarded information". Alternatively, it may be understood that the updated first duration is used by the relay apparatus to determine the time unit of the forwarded information. For example, as the relay apparatus moves, a delay (for example, the round-trip delay of signal transmission) between the relay apparatus and the network apparatus changes. Therefore, to reduce the delay, the first duration may be updated with a change of the delay, or may be periodically updated. For example, the network apparatus may determine to update the first duration when determining that a delay variation amount between the relay apparatus and the network apparatus is greater than a threshold.

In a possible implementation, the third information includes information indicating the updated first duration, or information indicating a difference between the first duration and the updated first duration.

In a possible implementation, before receiving the third information, the relay apparatus may send fourth information to the network apparatus. The fourth information indicates location information of the relay apparatus and/or a timing advance corresponding to the relay apparatus. The third information is determined based on the fourth information. A location or the timing advance of the relay apparatus may reflect the delay between the relay apparatus and the network apparatus. Therefore, the updated first duration is determined based on at least one of the location and the timing advance of the relay apparatus, to more accurately obtain the first duration, thereby further reducing the delay.

The first duration in this application may be a newly defined value, or an existing parameter may be reused. For example, in a possible implementation, the first duration is determined based on a scheduling offset value. Because the relay apparatus may reuse the scheduling offset value as the first duration, the network apparatus does not need to additionally send signaling to configure the first duration, thereby reducing signaling overheads.

In a possible implementation, the scheduling offset value is further used to perform at least one of the following: used to adjust sending timing of information of the terminal apparatus; used to adjust sending timing of feedback information of the terminal apparatus; used to adjust sending timing of a reference signal of the terminal apparatus; or used to adjust a random access occasion of the terminal apparatus.

In a possible implementation, the first information indicates at least one fourth time unit. For example, the fourth time unit indicated by the first information is a time unit that can be used for sending (or forwarding) information. In this embodiment of this application, the relay apparatus may select, based on the first duration, one or more appropriate fourth time units from the configured fourth time units to send (or forward) information (the selected one or more fourth time units are the second time unit). For example, the second time unit belongs to a fourth time unit that meets a first condition. The first condition includes: a quantity of time units between a time domain start location of the fourth time unit and the third time unit is greater than or equal to the first duration, or the sum of the first duration, the value of K, and the time unit offset value. The third time unit is a time domain resource for uplink transmission, and the index value of the third time unit is equal to that of the first time unit.

It can be learned that in this solution, the network apparatus may preconfigure some periodic or aperiodic resources (for example, the fourth time unit), and the relay apparatus may select a more appropriate resource from the configured resources to send information. Because the selected resource meets the first condition, even in a scenario in which the delay (for example, the round-trip delay of signal transmission) between the relay apparatus and the network apparatus is relatively large, a time domain resource for forwarding information in a time series relationship is not earlier than a time at which the forwarded information is received. In this way, in a large-delay communication scenario, a success rate of forwarding information by the relay apparatus can be improved.

In a possible implementation, the relay apparatus receives information used to configure at least one resource set. The at least one resource set includes a first resource set. The first resource set includes the at least one fourth time unit. The first information is used to activate the first resource set. For example, the information used to configure the at least one resource set is carried in radio resource control (radio resource control, RRC) signaling, and the first information is carried in medium access control (media access control, MAC) control element (control element, CE) signaling. In this solution, the network apparatus may preconfigure one or more resource sets, and subsequently activate/deactivate the resource set by using signaling. Because signaling for activating/deactivating the resource set occupies a relatively small quantity of bits, this solution can reduce overheads of subsequent signaling.

In still another possible implementation, the first information is carried in RRC signaling. In this way, flexibility of subsequent resource configuration can be improved, and signaling overheads can also be reduced.

In a possible implementation, the relay apparatus may access the network apparatus as an MT, and perform some operations with the network apparatus. For example, the relay apparatus may use a value of the first duration as the scheduling offset value corresponding to the relay apparatus. For example, the first duration (or the scheduling offset value corresponding to the relay apparatus) is further used for at least one of the following content: used to adjust sending timing of information of the relay apparatus; used to adjust sending timing of feedback information of the relay apparatus; used to adjust sending timing of a reference signal of the relay apparatus; or used to adjust a random access occasion of the relay apparatus. In this way, when the relay apparatus performs some operations with the network apparatus as a mobile terminal (mobile termination, MT), the first duration is used as the scheduling offset value corresponding to the relay apparatus, so that information transmission can better match the information round-trip delay between the relay apparatus and the network apparatus, thereby improving communication performance.

In a possible implementation, the information indicating the first duration includes indication information of the first duration, or a scheduling offset value and an adjustment value. The first duration is associated with the scheduling offset value and the adjustment value. This can improve flexibility if this solution.

According to a second aspect, an embodiment of this application provides a communication method. The method may be performed by a network apparatus. The network apparatus may be a network device or a chip (or a chip system) inside a network device.

In this application, the network apparatus sends first information in a first time unit to a relay apparatus. The first information indicates a resource for information sent by the relay apparatus. The network apparatus sends information indicating a first duration. The first duration is associated with a round-trip delay of signal transmission between the relay apparatus and the network apparatus. The network apparatus receives second information. A transmission process of the second information includes a process of forwarding the second information by the relay apparatus. The second time unit is determined based on the first duration and the first time unit.

In this application, one or more relay apparatuses may be included between the network apparatus and a terminal apparatus, and all the plurality of relay apparatuses may forward the second information in the second time unit. Correspondingly, the network apparatus may also receive the second information in the second time unit. In still another possible implementation, time units for forwarding the second information by two relay apparatuses may be different. If the relay apparatus is adjacent to the network apparatus, the network apparatus may receive the second information in the second time unit. If another relay apparatus is further included between the relay apparatus and the network apparatus, a time unit for receiving the second information by the network apparatus may not be the second time unit, but a time unit for forwarding the second information by a relay apparatus adjacent to the network apparatus. For ease of understanding, in some examples in this embodiment of this application, description is provided by using an example in which the network apparatus receives the second information in the second time unit. A manner in which another relay apparatus determines a time unit for forwarding the second information is similar to a manner in which the relay apparatus determines the second time unit in this application. Details are not described again.

Because the location of the time unit used for forwarding the information is further determined based on the first duration, the first duration is associated with the round-trip delay of signal transmission between the relay apparatus and the network apparatus. Therefore, the time unit that is used for forwarding information and that is determined in this application is more appropriate, thereby improving a success rate of uplink transmission performed by using the relay apparatus in a satellite communication scenario.

In a possible implementation, the network apparatus sends third information. The third information is used for determining an updated first duration. The updated first duration is used by the relay apparatus to determine a time unit of sent information (for example, the relay apparatus determines a time unit of to-be-forwarded information). The updated first duration is associated with the round-trip delay between the relay apparatus and the network apparatus.

In a possible implementation, the network apparatus receives fourth information. The fourth information indicates location information of the relay apparatus and/or a timing advance TA corresponding to the relay apparatus. The network apparatus determines the third information based on the fourth information.

For related content of the resource indicating the information sent by the relay apparatus (for example, the information forwarded by the relay apparatus), the first information, the first duration, the second time unit, the third information, and the scheduling offset value, refer to related descriptions in the first aspect. Details are not described again.

In a possible implementation, the network apparatus sends information used to configure at least one resource set. The at least one resource set includes a first resource set. The first resource set includes the at least one fourth time unit. The first information is used to activate the first resource set. For related content, refer to related descriptions in the first aspect and the possible implementations of the first aspect. Details are not described again.

For related content of the first information, the fourth time unit, the information used to configure the at least one resource set, the first duration, and the information indicating the first duration, refer to related descriptions of the first aspect and the possible implementations of the first aspect. Details are not described again.

For related content of the second aspect and the possible implementations of the second aspect, refer to related descriptions of the first aspect and the possible implementations of the first aspect. Details are not described again.

According to a third aspect, a communication apparatus is provided. The communication apparatus may be the foregoing relay apparatus or the foregoing network apparatus. The communication apparatus may include a communication unit and a processing unit, to perform any one of the first aspect and the second aspect or any possible implementation of the first aspect and the second aspect. The communication unit is configured to perform functions related to sending and receiving. The communication unit may be referred to as a transceiver unit. Optionally, the communication unit includes a receiving unit and a sending unit. In a design, the communication apparatus is a communication chip, the processing unit may be one or more processors or processor cores, and the communication unit may be an input/output circuit, an input/output interface, or an antenna port of the communication chip.

In another design, the communication unit may be a transmitter and a receiver, or the communication unit may be a transmitter machine and a receiver machine.

Optionally, the communication apparatus further includes modules that may be configured to perform any one of the first aspect and the second aspect or any possible implementation of the first aspect and the second aspect.

According to a fourth aspect, a communication apparatus is provided. The communication apparatus may be the foregoing relay apparatus or the foregoing network apparatus. The communication apparatus may include a processor and a memory, to perform any one of the first aspect and the second aspect or any possible implementation of the first aspect and the second aspect. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is caused to perform any one of the first aspect and the second aspect or any possible implementation of the first aspect and the second aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a fifth aspect, a communication apparatus is provided. The communication apparatus may be the foregoing relay apparatus or the foregoing network apparatus. The communication apparatus may include a processor, to perform any one of the first aspect and the second aspect or any possible implementation of the first aspect and the second aspect. The processor is coupled to a memory. Optionally, the communication apparatus further includes the memory. Optionally, the communication apparatus further includes a communication interface, and the processor is coupled to the communication interface.

In an implementation, when the communication apparatus is the relay apparatus or the network apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a system is provided, and the system includes the relay apparatus.

In a possible implementation, the system may further include a network apparatus.

According to a seventh aspect, a computer program product is provided. The computer program product includes a computer program (which may also be referred to as code or instructions). When the computer program is run, a computer is caused to perform any one of the first aspect and the second aspect or any possible implementation of the first aspect and the second aspect.

According to an eighth aspect, a computer-readable storage medium is provided. The computer-readable storage medium stores a computer program (which may also be referred to as code or instructions). When the computer program is run on a computer, the computer is caused to perform any one of the first aspect and the second aspect or any possible implementation of the first aspect and the second aspect.

According to a ninth aspect, a processing apparatus is provided, including an interface circuit and a processing circuit. The interface circuit may include an input circuit and an output circuit. The processing circuit is configured to: receive a signal through the input circuit, and transmit a signal through the output circuit, so that any one of the first aspect and the second aspect or any possible implementation of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, any type of logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the communication apparatus is a relay apparatus or a network apparatus, the interface circuit may be a radio frequency processing chip in the relay apparatus or the network apparatus, and the processing circuit may be a baseband processing chip in the relay apparatus or the network apparatus.

In another implementation, the communication apparatus may be some components in the relay apparatus or the network apparatus, for example, an integrated circuit product such as a system chip or a communication chip. The interface circuit may be an input/output interface, an interface circuit, an output circuit, an input circuit, a pin, a related circuit, or the like in the chip or a chip system. The processing circuit may be a logic circuit on the chip.

### BRIEF DESCRIPTION OF DRAWINGS

FIG. 1A is a diagram of a possible architecture of a communication system to which an embodiment of this application is applicable;
FIG. 1B is a diagram of another possible architecture of a communication system to which an embodiment of this application is applicable;
FIG. 1C is a diagram of another possible architecture of a communication system to which an embodiment of this application is applicable;
FIG. 2A is a diagram of another possible architecture of a communication system according to an embodiment of this application;
FIG. 2B is a diagram of another possible architecture of a communication system according to an embodiment of this application;
FIG. 2C is a diagram of another possible architecture of a communication system according to an embodiment of this application;
FIG. 2D is a diagram of another possible architecture of a communication system according to an embodiment of this application;
FIG. 2E is a diagram of another possible architecture of a communication system according to an embodiment of this application;
FIG. 3 is a diagram of a relationship between time units corresponding to uplink and downlink on a relay apparatus side according to an embodiment of this application;
FIG. 4 is a schematic flowchart of a communication method according to an embodiment of this application;
FIG. 5 is a diagram of a relationship between time units corresponding to uplink and downlink on a relay apparatus side according to an embodiment of this application;
FIG. 6 is a diagram of a relationship between time units corresponding to uplink and downlink on a relay apparatus side according to an embodiment of this application;
FIG. 7A and FIG. 7B are diagrams of a relationship between time units corresponding to uplink and downlink on a relay apparatus side according to an embodiment of this application;
FIG. 8 is another diagram of a relationship between time units corresponding to uplink and downlink on a relay apparatus side according to an embodiment of this application;
FIG. 9 is a diagram of a possible structure in another communication scenario according to an embodiment of this application;
FIG. 10 is a diagram of a possible structure of a communication apparatus according to an embodiment of this application; and
FIG. 11 is a diagram of a possible structure of another communication apparatus according to an embodiment of this application.

### DESCRIPTION OF EMBODIMENTS

The following describes nouns or terms in embodiments of this application.

### (1) Time unit

A time unit in embodiments of this application is, for example, a first time unit and a second time unit that are subsequently involved. The time unit in embodiments of this application belongs to a time domain resource. The time domain resource may include at least one of a radio frame, a subframe, a slot (slot), a mini-slot (mini slot), or an orthogonal frequency division multiplexing (orthogonal frequency division multiplexing, OFDM) symbol (symbol). A time unit may include a radio frame, a subframe, a slot (slot), a mini-slot (mini slot), or an OFDM symbol (symbol). One time unit may further include a resource aggregated by a plurality of radio frames, a plurality of subframes, a plurality of slots, a plurality of mini-slots, or a plurality of OFDM symbols. One radio frame may include a plurality of subframes, one subframe may include one or more slots, and one slot may include at least one symbol. Alternatively, one radio frame may include a plurality of slots, and one slot may include at least one symbol. It should be noted that, in embodiments of this application, one OFDM symbol may also be referred to as one symbol for short.

### (2) Frequency domain resource

The frequency domain resource may include at least one of a resource element (resource element, RE), a resource block (resource block, RB), a channel, a sub-channel (sub channel), a carrier (carrier), or a bandwidth part (BWP, bandwidth part). A frequency domain unit may include an RE, an RB, a channel, a sub-channel (sub channel), a carrier (carrier), a bandwidth part (BWP, bandwidth part), or the like. One frequency domain unit may further include a resource including a plurality of REs, a plurality of RBs, a plurality of sub-channels, a plurality of carriers, or a plurality of BWPs. In this embodiment of this application, a channel may be equivalently replaced with a resource block set (resource block set, RB set), and a frequency domain bandwidth of an RB set may be 20 megahertz (mega hertz, MHz).

The technical solutions of this application may be applied to a non-terrestrial network (non-terrestrial network, NTN) system such as a satellite communication system, a high-altitude platform (high-altitude platform station, HAPS) communication system, or an uncrewed aerial vehicle, for example, an integrated communication and navigation (integrated communication and navigation, IcaN) system, a global navigation satellite system (global navigation satellite system, GNSS), and an ultra-dense low earth orbit satellite communication system. The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system.

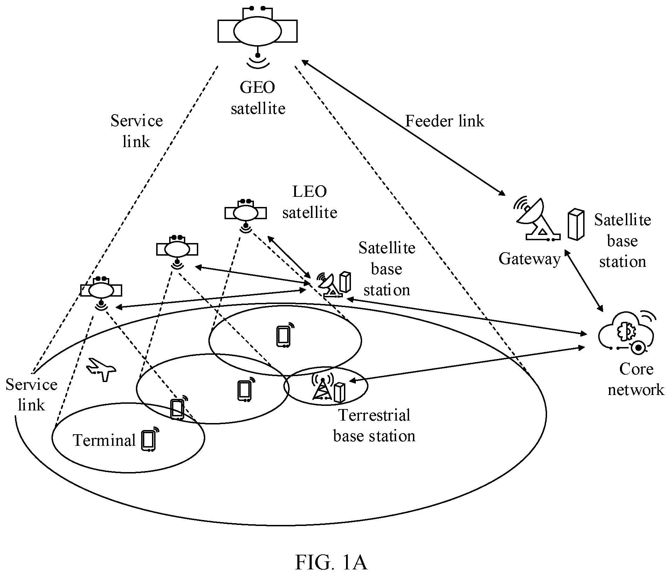

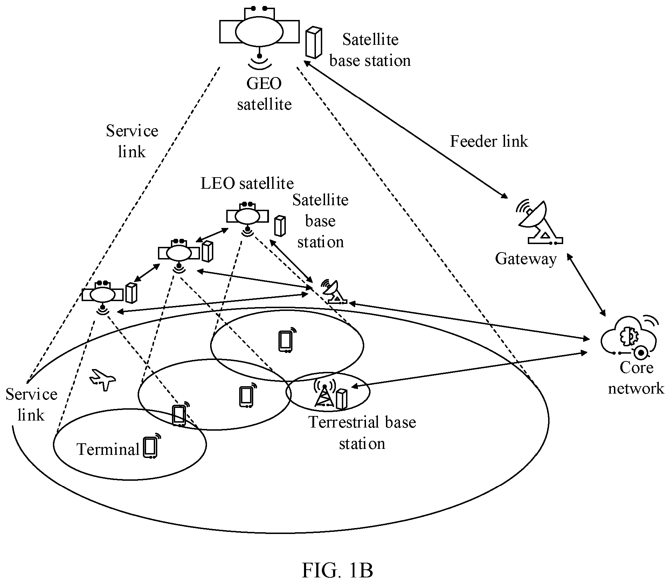

FIG. 1A and FIG. 1B are diagrams of examples of network architectures of several communication systems to which embodiments of this application are applicable. The communication system may include a satellite, a network device, a terminal device, and the like. The communication system may further include a gateway and a core network device. FIG. 1A and FIG. 1B show examples of a converged network architecture of an NTN and a terrestrial network. The following provides descriptions with reference to the accompanying drawings.

### (1) Satellite

The satellite may be a high elliptical orbit (highly elliptical orbit, HEO) satellite, a GEO satellite, a medium earth orbit (medium earth orbit, MEO) satellite, and a low-earth orbit (low-earth orbit, LEO) satellite. An operation mode of the satellite is not limited in embodiments of this application. For example, the operation mode of the satellite may be a transparent (transparent) mode, or may be a regenerative (regenerative) mode. FIG. 1A is shown by using an example in which a working mode of a satellite is a transparent transmission mode, and FIG. 1B is shown by using an example in which a working mode of a satellite is a regenerative mode.

When the satellite works in the transparent (transparent) transmission mode, the satellite has a transparent relay forwarding function. A gateway has functions of a network device (for example, a base station) or a part of functions of a network device (for example, a base station). In this case, the gateway may be considered as a network device (for example, a base station). Alternatively, the network device (for example, a base station) and the gateway may be separately deployed. In this case, a delay of a feeder link includes two parts: a delay from the satellite to the gateway and a delay from the gateway to a gNB. A transparent transmission mode is discussed below by using an example in which the gateway and the gNB are located together or close to each other. If the gateway is far away from the gNB, a delay of a feeder link is a sum of a delay from the satellite to the gateway and a delay from the gateway to the gNB.

When the satellite works in a regenerative (regenerative) mode, the satellite has a data processing capability, and has functions of a network device (for example, a base station) or a part of functions of a network device (for example, a base station). In this case, the satellite may be considered as a network device (for example, a base station).

The satellite may perform wireless communication with a terminal by using a broadcast communication signal, a navigation signal, and the like. Optionally, each satellite may provide a communication service, a navigation service, a positioning service, and the like for the terminal device via a plurality of beams. For example, each satellite uses a plurality of beams to cover a service region, and a relationship between different beams may be one or more of time division, frequency division, and spatial division.

### (2) Gateway

A gateway (or referred to as a terrestrial station, an earth station, a signal gateway station, or a gateway station) (gateway) may be configured to connect a satellite to a network device on the ground (for example, a base station on the ground). One or more satellites may be connected to one or more terrestrial network devices (for example, a terrestrial base station) through one or more gateways. This is not limited herein.

A link between the satellite and a terminal is referred to as a service link (service link), and a link between the satellite and the gateway is referred to as a feeder link (feeder link). The network device and the gateway may be separately deployed. In this case, the delay of the feed link may include two parts: a delay from the satellite to the gateway and a delay from the gateway to the network device.

### (3) Network device

The network device in embodiments of this application may include a network device deployed on a satellite (for example, a satellite base station), or may include a network device deployed on a gateway, or may include a network device deployed on the ground (for example, a terrestrial base station).

The network device in embodiments of this application may be a radio access network (radio access network, RAN) node. The RAN may be an evolved universal terrestrial radio access (evolved universal terrestrial radio access, E-UTRA) system, an NR system, or a future radio access system defined in 3rd generation partnership project (3rd generation partnership project, 3GPP). The RAN may further include the foregoing two or more different radio access systems. The RAN may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a next-generation NodeB in a 6th generation (6th generation, 6G) mobile communication system, or a base station in a future mobile communication system. The RAN node may be a macro base station, or may be a micro base station or an indoor base station, or may be a relay node, a donor node, or the like.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete a part or all of functions of a physical layer. For specific descriptions of the foregoing protocol layers, refer to related technical specifications in 3GPP. The RU may be configured to receive and send radio frequency signals. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have different names. For example, in an O-RAN system, a CU may be referred to as an open CU (open CU, O-CU), a DU may be referred to as an open DU (open DU, O-DU), and an RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which the base station is used as a RAN node.

### (4) Core network (core network, CN) device

The core network device is a device that is disposed on the ground and can communicate with an NTN device in an NTN system. The CN device is a network element included in a CN part in a mobile communication system. The CN device can connect a terminal device to different data networks, and perform services such as authentication, charging, mobility management, session management, policy control, and user plane forwarding. The CN device may be a CN device in a current mobile communication system (for example, a 5th generation (5th generation, 5G) mobile communication system), or may be a CN device in a future mobile communication system. In mobile communication systems of different standards, names of CN devices having a same function may be different. However, a specific name of a CN device having each function is not limited in embodiments of this application.

For example, in a 4th generation (4th generation, 4G) mobile communication system (that is, long term evolution (long term evolution, LTE)), a network element responsible for functions such as access control, security control, and signaling coordination is a mobility management entity (Mobility management entity, MME); a network element serving as a local mobility management anchor is a serving gateway (serving gateway, S-GW); a network element serving as a handover anchor of an external data network and responsible for internet protocol (internet protocol, IP) address allocation is a packet data network (packet data network, PDN) gateway (PDN gateway, P-GW); a network element that stores user-related data and subscription data is a home subscriber server (home subscriber server, HSS); and a network element that is responsible for a policy and charging function is referred to as a policy and charging rule function (policy and charging rule function, PCRF) network element.

For another example, in a 5G mobile communication system, based on specific logical function division, a core network may be divided into a control plane (control plane, CP) and a user plane (user plane, UP). A network element responsible for a control plane function in the CN may be collectively referred to as a control plane network element, and a network element responsible for a user plane function may be collectively referred to as a user plane network element. Specifically, on the user plane, a network element used as an interface of a data network and responsible for functions such as user plane data forwarding is a user plane function (user plane function, UPF) network element. On the control plane, a network element responsible for access control and mobility management functions is referred to as an access and mobility management function (access and mobility management function, AMF) network element, a network element responsible for session management and control policy execution is referred to as a session management function (session management function, SMF) network element, a network element responsible for subscription data management and user access authorization functions is referred to as a unified data management (unified data management, UDM) network element, a network element responsible for charging and policy control functions is referred to as a policy control function (policy and charging function, PCF) network element, and a network element responsible for transmitting a requirement of an application side for a network side is an application function (application function, AF) network element.

### (5) Terminal

The terminal is a device having wireless transmission and reception functions, and may send a signal to a base station or receive a signal from a base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with wireless transmission and reception functions, a wearable device, a vehicle, an airplane, a ship, a robot, a robotic arm, a smart home device, or the like. A specific technology and a specific device form that are used by the terminal are not limited in embodiments of this application.

Embodiments of this application are also applicable to another communication system architecture, for example, an air-to-ground (air to ground, ATG) communication system. The communication system includes at least one network device and at least one high-altitude terminal. The high-altitude terminal includes, for example, a high-altitude aircraft and an on-board terminal. The satellite in FIG. 1A and that in FIG. 1B may alternatively be replaced with another relay device, for example, may be replaced with another NTN device such as a high-altitude platform station (high-altitude platform station, HAPS). The communication system shown in FIG. 1A or FIG. 1B is used as an example, and constitutes no limitation on the communication system to which the method provided in embodiments of this application is applicable.

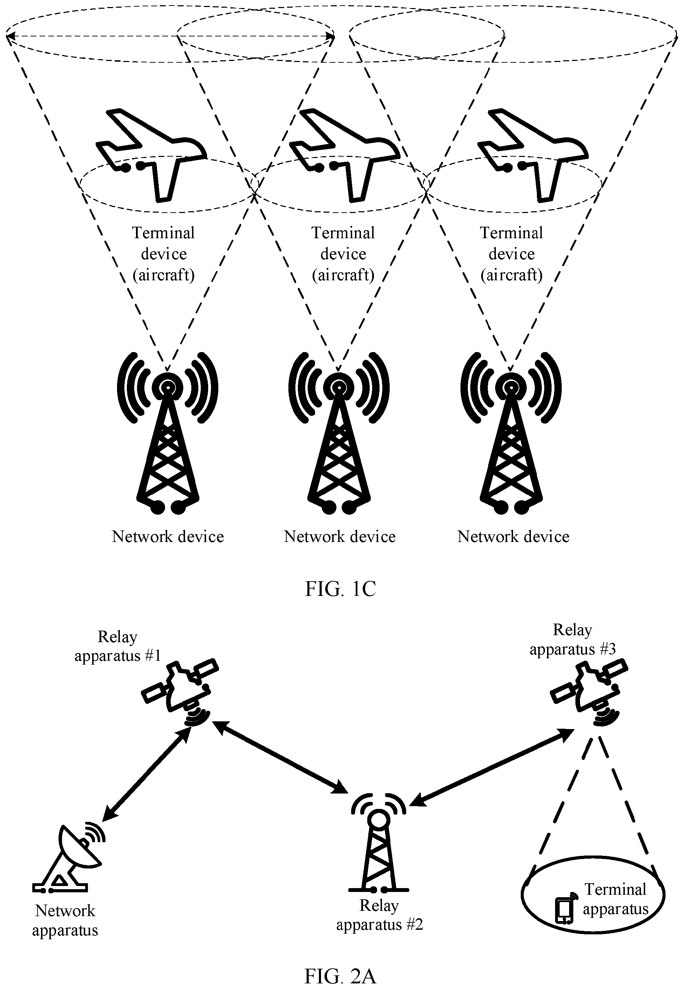

It may be understood that embodiments of this application are also applicable to an air-to-ground (air-to-ground, ATG) communication system. In an example, FIG. 1C is a diagram of a network architecture of still another communication system to which an embodiment of this application is applicable. The communication system includes at least one network device and at least one high-altitude terminal device. The high-altitude terminal device includes, for example, a high-altitude aircraft and an on-board terminal device.

Based on the content shown in FIG. 1A, FIG. 1B, and FIG. 1C and the foregoing other content, FIG. 2A is an example of a diagram of an architecture of a communication system according to an embodiment of this application. As shown in FIG. 2A, the communication system includes a terminal apparatus and a network apparatus, and at least one relay apparatus is further included between the terminal apparatus and the network apparatus, for example, a relay apparatus #1, a relay apparatus #2, and a relay apparatus #3 shown in FIG. 2A. The terminal apparatus in FIG. 2A may be the terminal device in FIG. 1A, FIG. 1B, and FIG. 1C, or a chip (or a chip system) in the terminal device. The network apparatus in FIG. 2A may be a chip (or a chip system) in the network device (for example, an access network device) or the network device (for example, an access network device) in FIG. 1A, FIG. 1B, and FIG. 1C. The relay apparatus in FIG. 2A may be the satellite device in FIG. 1A, FIG. 1B, and FIG. 1C or a chip system inside the satellite device, or may be the network device (for example, a terrestrial base station) deployed on the ground or a chip (or a chip system) inside the network device (for example, a terrestrial base station) in FIG. 1A, FIG. 1B, and FIG. 1C.

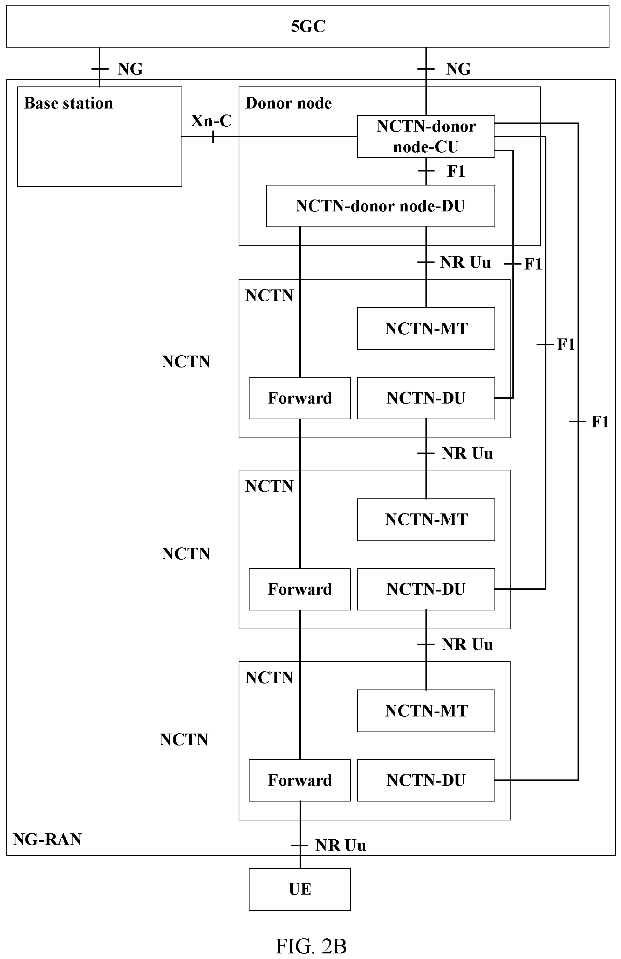

FIG. 2B is an example of a diagram of an architecture of a communication system to which an embodiment of this application is applicable. As shown in FIG. 2B, the communication system includes UE and a 5G core network (5G Core Network, 5GC). The UE may be the terminal device shown in FIG. 1A, FIG. 1B, FIG. 1C, or FIG. 2A, and a 5GC/base station/donor node/gNB may be the network device shown in FIG. 1A, FIG. 1B, FIG. 1C, or FIG. 2A. As shown in FIG. 2B, the communication system further includes one or more relay apparatuses, and the relay apparatus is represented as a network controlled transparent node (network controlled transparent node, NCTN) in FIG. 2B. The transparent forwarding node has an amplify-and-forward (Amplify-and-Forward, AF) relay function. The amplify-and-forward relay means that after receiving a signal, a relay node directly forwards the received signal to a destination node without decoding or encoding the signal. As shown in FIG. 2B, the communication system further includes a base station (for example, gNobeB) and a donor node (for example, gNobeB-NCTN-donor). The relay apparatus shown in FIG. 2B may be any relay apparatus in FIG. 2A, or may be the satellite device in FIG. 1A, FIG. 1B, and FIG. 1C or a chip system inside the satellite device, or may be the network device (for example, a terrestrial base station) deployed on the ground or a chip (or a chip system) inside the network device (for example, a terrestrial base station) in FIG. 1A, FIG. 1B, and FIG. 1C.

As shown in FIG. 2B, the communication system includes a relay apparatus, and the relay apparatus belongs to a device in an NG-RAN. The relay apparatus may support NR-based access and backhaul functions, and may include an NCTN-mobile termination (mobile termination, MT) and an NCTN-DU. The NCTN-MT may serve as a common terminal apparatus to be connected to a CU or an NCTN-DU of a donor node of the NCTN-MT, to be used as a control link. The NCTN-MT transmits or receives beam direction information of a control backhaul/control link (control link)/access link (access link), information of enabling or disabling forwarding and transmission, routing-related information, and the like. The NCTN-DU may provide access for the NCTN-MT/network-controlled regenerative node (network controlled regenerative node, NCRN)-MT, and establish a lower-level control link. The relay apparatus may further include a forwarding (forwarding) function. The forwarding (forwarding) may be used to provide amplified forwarding (for example, transparent forwarding) of a UL/DL radio frequency signal between the donor node (gNB-donor)/regenerative node and the terminal apparatus.

The donor node may support a gNodeB (also referred to as a gNodeB-donor) with additional functions of the relay apparatus, and may be connected to a core network, for example, an optical fiber. The donor node may include an NCTN-donor node-CU (which may also be referred to as an NCTN-donor-CU) and an NCTN-donor node-DU (which may also be referred to as an NCTN-donor-DU). The NCTN-donor node-CU may provide a connection for the NCTN-donor node-DU and the NCTN-DU of the relay apparatus. The NCTN-donor node-CU may serve as a base station to connect to another base station (for example, through an Xn-C interface). The base station accesses the 5GC. Alternatively, the NCTN-donor node-CU directly accesses the 5GC (for example, through an NG interface). The base station accesses the 5GC (for example, through an NG interface). The NCTN-donor node-DU may provide access for the terminal apparatus or the NCTN-MT.

The F1 interface is used for connection between the NCTN-DU and the NCTN-donor node-CU, and is all inherited from an F1 interface between the DU and the CU. The Uu interface (for example, an NR Uu interface) is used for connection between the NCTN-donor node-DU and the NCTN-MT. The Uu interface may further be used for connection between a relay network and UE. As shown in FIG. 2B, the NCTN accesses the donor node as a terminal apparatus, and establishes a Uu interface connection. As shown in FIG. 2B, the UE may be connected to forwarding (forwarding) module of the NCTN, and forwarding (forwarding) module of NCTNs is connected and accesses the NCTN-donor node-DU.

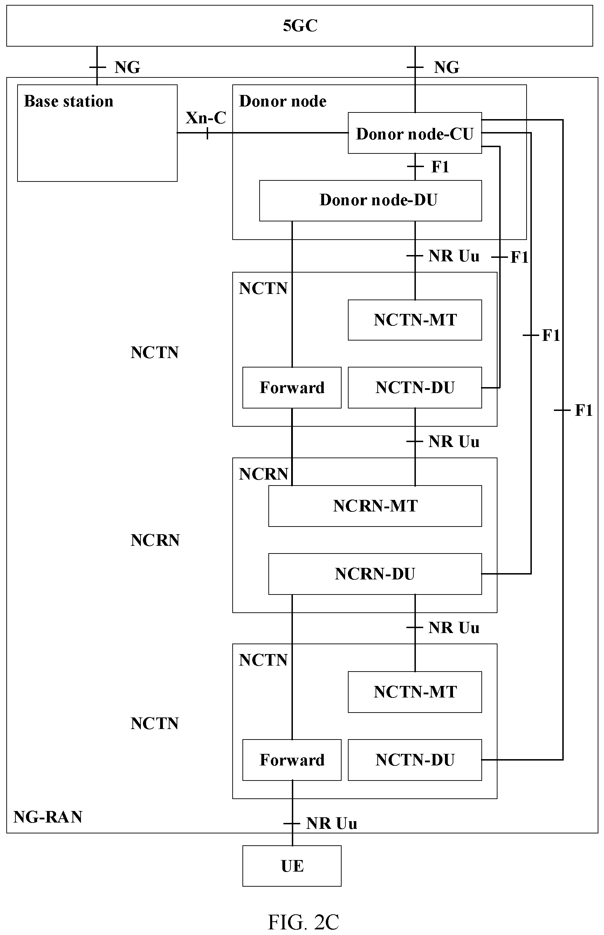

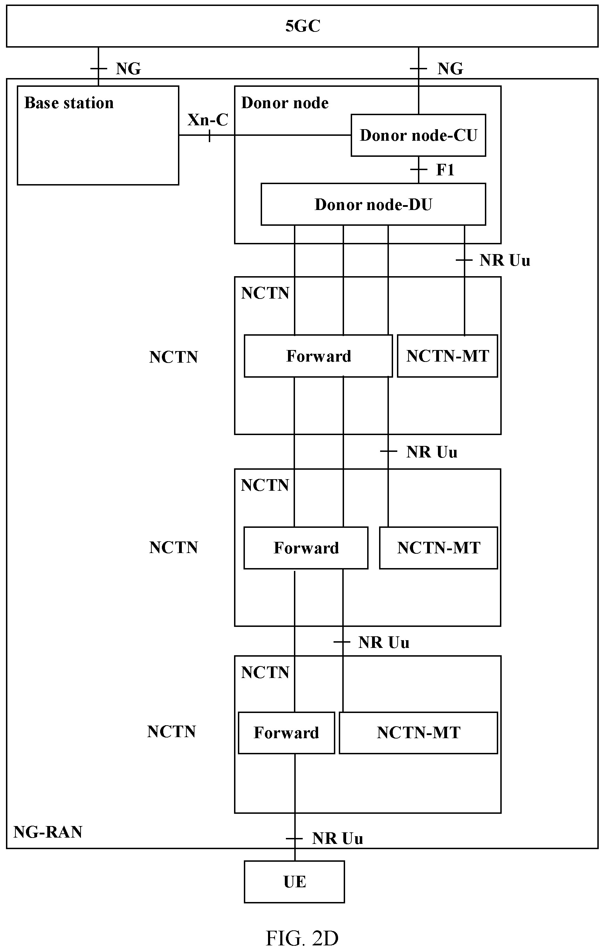

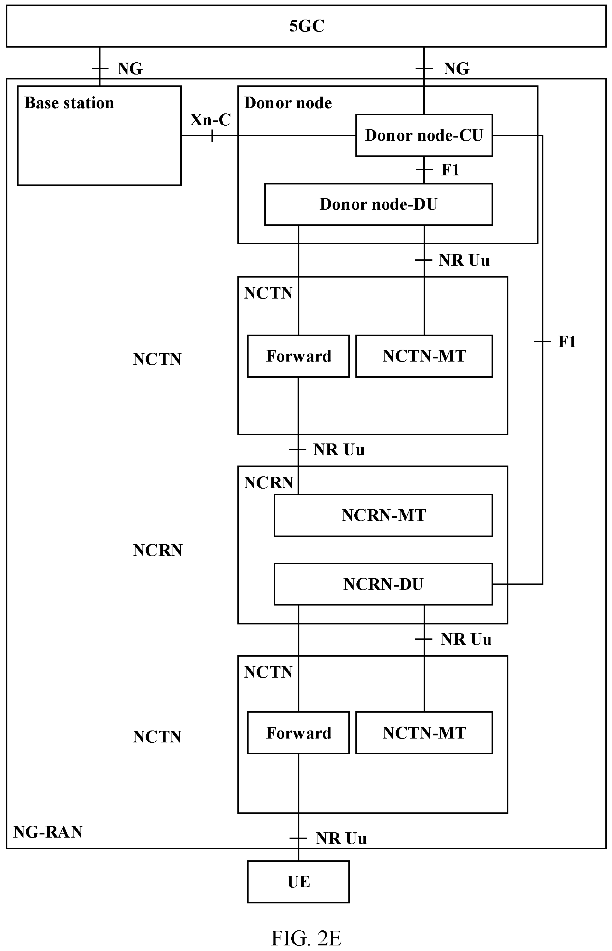

FIG. 2C, FIG. 2D, and FIG. 2E are examples of diagrams of architectures of several communication systems to which embodiments of this application are applicable.

A difference between FIG. 2B and FIG. 2C lies in that three relay apparatuses in FIG. 2B are all NCTNs, while one relay apparatus in FIG. 2C is an NCRN. As shown in FIG. 2B, the NCRN may include an NCRN-MT and an NCRN-DU. The NCRN-MT may serve as a common terminal apparatus to be connected to a DU/NCTN-DU/NCRN-DU of the donor node of the NCRN-MT, and serve as a control link and a wireless backhaul link (providing a digital forwarding or regenerative forwarding function, and supporting RLC layer forwarding or MAC layer forwarding). The NCRN has a decode-and-forward (decode-and-forward, DF) relay function. The decode-and-forward relay means that after receiving a signal, a relay node decodes the signal, re-encodes a decoding result, and finally forwards an encoded result to a destination node. The NCRN-DU may provide access for a lower-level NCTN-MT/NCRN-MT/terminal apparatus. For other content of FIG. 2C, refer to the foregoing descriptions of FIG. 2B. Details are not described again.

A difference between FIG. 2B and FIG. 2D lies in that a relay apparatus in FIG. 2D includes forwarding (forwarding) and an NCTN-MT, but does not include an NCTN-DU. The NCTN-MT may serve as a common terminal apparatus to be connected to the DU/NCTN-DU/NCRN-DU connected to the donor node of the NCTN-MT. As a control link, the NCTN-MT may further send/receive beam direction information of a control backhaul/control link (control link)/access link (access link), information of enabling or disabling forwarding and transmission, routing-related information, and the like. The forwarding (forwarding) may provide amplified forwarding (transparent forwarding) of a UL/DL radio frequency signal between the gNB-donor/NCRN and the terminal apparatus. For other content of FIG. 2D, refer to the foregoing descriptions of FIG. 2B. Details are not described again.

A difference between FIG. 2C and FIG. 2E lies in that the NCTN in FIG. 2E includes forwarding (forwarding) and an NCTN-MT, but does not include an NCTN-DU. For other content of FIG. 2E, refer to the foregoing descriptions of FIG. 2B, FIG. 2C, and FIG. 2D. Details are not described again.

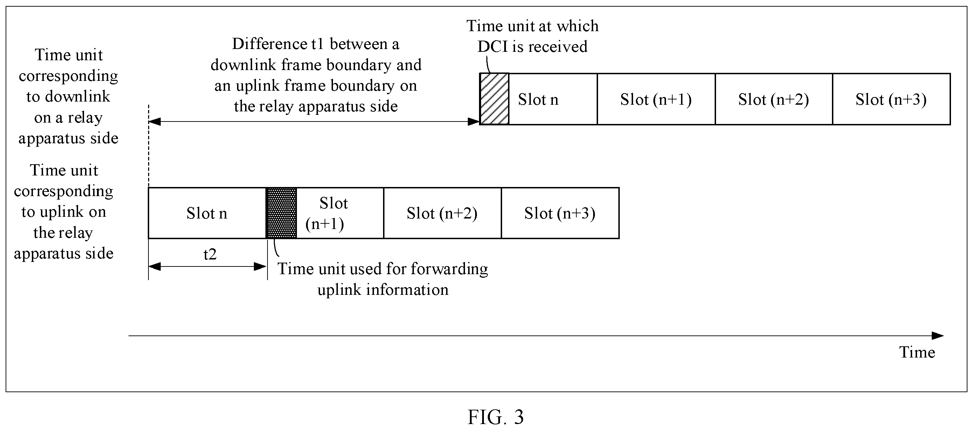

FIG. 3 is an example of a diagram of a relationship between time units corresponding to uplink and downlink on a relay apparatus side according to an embodiment of this application.

With reference to FIG. 3, because a round-trip delay between a relay apparatus and a network apparatus is relatively large, to ensure frame boundary alignment (timing relationship alignment) of downlink and uplink at the network apparatus or to ensure a fixed frame boundary offset between downlink and uplink at the network apparatus, an offset value t1 exists between downlink and uplink frame boundaries or at a timing relationship at the relay apparatus. The offset value t1 is related to "the round-trip delay between the network apparatus and the relay apparatus and an internal processing delay of the relay apparatus". For example, a satellite orbit height is 1200 km, a round-trip delay range of different communication elevation angles for transmitting a signal through a relay apparatus (for example, a satellite device) is 16 ms to 32.7 ms, and is far greater than a time length indicated by current (K+Time unit offset value (slot_offset)). In a satellite communication scenario, the round-trip delay between the network apparatus and the relay apparatus is relatively large, and therefore t1 is relatively large. Consequently, in a time series relationship, a slot (n+1) used for forwarding uplink information is reversely before a slot n used for receiving first information. In other words, a time used for forwarding the uplink information is before a time at which the first information is received. Alternatively, it is understood that, in a time sequence, a time used for forwarding information is earlier than a time at which first information (for example, DCI) is received. Consequently, in a large-delay communication scenario, the relay apparatus cannot successfully forward the information.

Based on this problem, this embodiment of this application provides a possible implementation. In this implementation, the relay apparatus may determine, based on the first duration, the time unit used for forwarding the information, so that the determined time unit for forwarding the information is more appropriate, to meet a requirement of the time series relationship. For example, in the time series relationship, the time unit used for forwarding the information is after the time unit of the first information (for example, the DCI). In other words, the time used for forwarding the information is after the time at which the first information is received, so that the relay apparatus can successfully forward the information. The solutions provided in embodiments of this application can resolve a problem of forwarding information by a relay apparatus in a scenario with a relatively large delay. Because the problem is resolved, the relay apparatus can be introduced into the large-delay scenario, to reduce deployment of a device such as a terrestrial station in the large-delay scenario, thereby reducing costs.

The following further describes embodiments of this application with reference to the accompanying drawings.

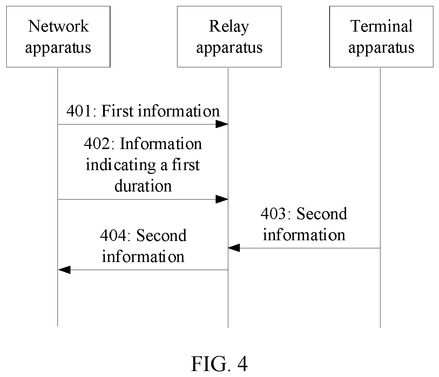

Based on the content shown in FIG. 1A, FIG. 1B, FIG. 1C, FIG. 2A, FIG. 2B, FIG. 2C, FIG. 2D, FIG. 2E, or FIG. 3 and the foregoing other content, FIG. 4 shows an example of a possible schematic flowchart of a communication method according to an embodiment of this application. For ease of understanding, interaction between a terminal apparatus, a network apparatus, and a relay apparatus is used as an example in FIG. 4 for description. The relay apparatus in this embodiment of this application may be any relay apparatus in FIG. 2A, for example, may be a satellite device or a chip (or a chip system) in a satellite device in FIG. 1A, FIG. 1B, FIG. 1C, FIG. 2A, FIG. 2B, FIG. 2C, FIG. 2D, or FIG. 2E; or may be a network device deployed on the ground or a chip (or a chip system) in a network device in FIG. 1A, FIG. 1B, FIG. 1C, FIG. 2A, FIG. 2B, FIG. 2C, FIG. 2D, or FIG. 2E. The terminal apparatus may be the terminal in FIG. 1A, FIG. 1B, FIG. 1C, or FIG. 2A, or a chip system inside the terminal. The network apparatus may be the network device in FIG. 1A, FIG. 1B, FIG. 1C, FIG. 2A, FIG. 2B, FIG. 2C, FIG. 2D, or FIG. 2E, or a chip system inside the network device. In this embodiment of this application, the network apparatus and the satellite apparatus may be integrated into a same device. For example, both the network apparatus and the satellite apparatus are satellite base stations. In this case, it may also be understood that the satellite apparatus works in a regenerative mode. In another possible implementation, the network apparatus and the satellite apparatus may alternatively belong to two devices. In this case, it may also be understood that the satellite apparatus works in a transparent transmission mode.

The following provides descriptions with reference to FIG. 4.

Step 401: A network apparatus sends first information.

Correspondingly, a relay apparatus receives the first information in a first time unit.

The first time unit in this embodiment of this application may be, for example, one symbol or one slot. For descriptions of the time unit, refer to the foregoing content. In this embodiment of this application, description is provided by using an example in which the first time unit is one slot.

The first information indicates a resource for information sent by the relay apparatus. In this embodiment of this application, the "resource for information sent by the relay apparatus" may also include or be replaced with a "resource for information forwarded by the relay apparatus". It may also be understood that the first information indicates a resource for information forwarded by the relay apparatus. There are a plurality of possible transmission directions of the information forwarded by the relay apparatus. For ease of understanding, in some examples of this application, the information forwarded by the relay apparatus is uplink information (that is, a transmission direction of the information forwarded by the relay apparatus is from the terminal apparatus to the network apparatus). In this example, it may also be understood that the first information may indicate a resource for the uplink information forwarded by the relay apparatus. In this embodiment of this application, the information forwarded by the relay apparatus may be uplink information, or may be other information. For example, the information forwarded by the relay apparatus may be information in another sending direction, for example, information sent from one terminal apparatus to another terminal apparatus, information sent from one network apparatus to another network apparatus, or information sent from one relay apparatus to another relay apparatus.

In this embodiment of this application, the first information may include a plurality of types of information. For example, the first information may include at least one of a resource (information A1) used to indicate the information sent by the relay apparatus (for example, the information forwarded by the relay apparatus), a sending address (information A2) corresponding to the information sent by the relay apparatus (for example, the information forwarded by the relay apparatus), a sending path (information A3), a sending direction (information A4), a sending manner (information A5), and a frequency (information A6).

The information A1 indicates the resource for the information sent by the relay apparatus.

For example, the resource indicating the information sent by the relay apparatus may include or be replaced with the resource indicating the information forwarded by the relay apparatus.

The resource indicating the information sent by the relay apparatus (for example, the information forwarded by the relay apparatus) may include, for example, information indicating a time domain start location of a second time unit, and/or information indicating a length of a time domain resource occupied by the second time unit.

The resource indicating the information sent by the relay apparatus (for example, the information forwarded by the relay apparatus) may further include a frequency domain resource, for example, a start RB index and/or a quantity of RBs. The relay apparatus may subsequently send second information on the frequency domain resource.

The information A2 indicates the sending address corresponding to the information sent by the relay apparatus.

The sending address corresponding to the information sent by the relay apparatus may, for example, include or be replaced with: a sending address corresponding to the information forwarded by the relay apparatus.

The information A2 may include, for example, the sending address corresponding to the information sent by the relay apparatus (for example, the information forwarded by the relay apparatus), for example, a next-hop address or an address of the network apparatus.

The information A3 indicates the sending path corresponding to the information sent by the relay apparatus.

The sending path corresponding to the information sent by the relay apparatus may, for example, include or be replaced with: a sending path corresponding to the information forwarded by the relay apparatus.

The information A2 may include, for example, information about the sending path corresponding to the information sent by the relay apparatus (for example, the information forwarded by the relay apparatus), for example, an identifier of the path, or an address of each node on the path.

The information A4 indicates the sending direction corresponding to the information sent by the relay apparatus.

The sending direction corresponding to the information sent by the relay apparatus may, for example, include or be replaced with: a sending direction corresponding to the information forwarded by the relay apparatus.

The sending direction corresponding to the information sent by the relay apparatus (for example, the information forwarded by the relay apparatus) includes an uplink transmission direction or a downlink transmission direction. The first information may indicate a transmission direction of information to be sent by the relay apparatus.

The information A5 indicates the sending manner of the information sent by the relay apparatus.

The sending manner of the information sent by the relay apparatus may, for example, include or be replaced with: a sending manner of the information forwarded by the relay apparatus.

The sending manner of the information sent by the relay apparatus (for example, the information forwarded by the relay apparatus) includes transparent forwarding or regenerative forwarding. It may also be understood that the relay apparatus works in a transparent forwarding mode or a regenerative forwarding mode.

The information A6 indicates the frequency corresponding to the information sent by the relay apparatus.

The frequency corresponding to the information sent by the relay apparatus may, for example, include or be replaced with: a frequency corresponding to the information forwarded by the relay apparatus.

The frequency corresponding to the information sent by the relay apparatus (for example, the information forwarded by the relay apparatus) may include, for example, 20 gigahertz (giga Hertz, GHz) or 30 GHz. The relay apparatus may send the information at these frequencies, for example, forward the information at these frequencies.

Step 402: The network apparatus sends information indicating a first duration.

The relay apparatus receives the information indicating the first duration.

The information that is received by the relay apparatus and indicates the first duration may be directly sent by the network apparatus to the relay apparatus, or may be sent by the network apparatus to the relay apparatus through another apparatus (for example, another relay apparatus).

In this embodiment of this application, the information indicating the first duration and the first information in step 401 may be carried in a same piece of signaling, or may be carried in two pieces of signaling to be separately sent. There is no absolute sequence between step 401 and step 402, and step 402 may be performed before step 401.

The first duration is associated with a delay (for example, a round-trip delay of signal transmission) between the relay apparatus and the network apparatus. In a possible implementation, the network apparatus may calculate the first duration based on the delay (for example, the round-trip delay of signal transmission) between the relay apparatus and the network apparatus. The first duration is greater than or equal to the delay (for example, the round-trip delay of signal transmission) between the relay apparatus and the network apparatus. In this way, in a time sequence, a second time unit that is subsequently determined by the relay apparatus based on the first duration and that is used for forwarding the information is later than the first time unit, so that the relay apparatus can successfully forward the information.

In another possible implementation, the first duration may alternatively be less than the round-trip delay of signal transmission between the relay apparatus and the network apparatus. In this implementation, the relay apparatus may further determine the time unit used for forwarding the information based on the first duration, or the relay apparatus determines, based on another parameter and the first duration, the time unit used for forwarding the information. In this solution, the determined time unit can be more appropriate. In still another possible implementation, when the first duration is less than the round-trip delay of signal transmission between the relay apparatus and the network apparatus, a network apparatus side may perform timing compensation for uplink data, that is, delay reception of an uplink signal, and a frame boundary of the uplink data received by the network apparatus side is later than a frame boundary of downlink data.

The information that is received by the relay apparatus and that indicating the first duration may include information about the first duration, or may include information about a time unit corresponding to the first duration. A quantity of time units corresponding to the first duration may be, for example, a quotient of the first duration and a duration of one time unit. The relay apparatus may calculate the second time unit based on the first duration, or may calculate the second time unit based on the quantity of time units corresponding to the first duration.

In this embodiment of this application, description is provided by using an example in which the first duration is △T slots. A meaning of the parameter at another location is the same as this. A meaning of △T is not repeatedly described. In a possible implementation, $ΔT = \left⌈RTD\left(Network apparatus, Relay apparatus\right)/slot_duration\right⌉$, or $ΔT = \left⌈TA/slot_duration\right⌉$, where ┌ ┐ represents ceiling, RTD (Network apparatus, Relay apparatus) represents the delay (for example, the round-trip delay of signal transmission) between the relay apparatus and the network apparatus, slot_duration represents a length of one time unit, and TA represents a timing advance (Timing Advance, TA) of the relay apparatus.

Step 403: A terminal apparatus sends second information.

The relay apparatus receives the second information.

In this application, the second information received by the relay apparatus may come from the terminal apparatus or another relay apparatus, or may come from another apparatus, for example, from a network apparatus. The relay apparatus may send the second information to the network apparatus or another relay apparatus, or may send the second information to another apparatus, for example, send the second information to a terminal apparatus.

In this embodiment of this application, the second information may be understood as information that needs to be forwarded by the relay apparatus, or may be understood as to-be-forwarded information. The second information may belong to uplink information. In other words, a sending direction of the second information is from the terminal apparatus to the network apparatus. For ease of understanding, in some examples in this embodiment of this application, description is provided by using an example in which the second information belongs to uplink information. When the second information belongs to uplink information, in step 403, the second information received by the relay apparatus may come from a terminal apparatus or another relay apparatus, and in subsequent step 404, the relay apparatus may send the second information to another relay apparatus or the network apparatus. In this embodiment of this application, the second information may be uplink information, or may be other information. For example, the second information may be information in another sending direction, for example, information sent from one terminal apparatus to another terminal apparatus, information sent from one network apparatus to another network apparatus, or information sent from one relay apparatus to another relay apparatus.

Step 404: The relay apparatus sends the second information in the second time unit.

Correspondingly, the network apparatus receives the second information.

In step 404, the relay apparatus may send the second information to the network apparatus or another relay apparatus in the second time unit, and the network apparatus may receive the second information from the relay apparatus or the another relay apparatus.

In this application, one or more relay apparatuses may be included between the network apparatus and a terminal apparatus, and all the plurality of relay apparatuses may forward the second information in the second time unit. Correspondingly, the network apparatus may also receive the second information in the second time unit. In still another possible implementation, time units for forwarding the second information by two relay apparatuses may be different. If the relay apparatus is adjacent to the network apparatus, the network apparatus may receive the second information in the second time unit. If another relay apparatus is further included between the relay apparatus and the network apparatus, a time unit for receiving the second information by the network apparatus may not be the second time unit, but a time unit for forwarding the second information by a relay apparatus adjacent to the network apparatus. For ease of understanding, in some examples in this embodiment of this application, description is provided by using an example in which the network apparatus receives the second information in the second time unit. A manner in which another relay apparatus determines a time unit for forwarding the second information is similar to a manner in which the relay apparatus determines the second time unit in this application. Details are not described again.

The second time unit in this embodiment of this application may be, for example, one symbol or one slot. For descriptions of the time unit, refer to the foregoing content. In this embodiment of this application, description is provided by using an example in which the second time unit is one slot. In these examples, the slot may be replaced with another time unit, for example, the slot may be replaced with a symbol.

In this embodiment of this application, the relay apparatus may transparently forward the second information, or may regenerate and forward the second information. Alternatively, it is understood that the relay apparatus may work in a transparent forwarding mode, and send the second information. Alternatively, the relay apparatus works in a regenerative forwarding mode, and send the second information. For example, the relay apparatus may have an AF relay function. For example, after receiving the second information, the relay apparatus directly forwards the received second information to a destination node without decoding or encoding the second information. Alternatively, the relay apparatus has a DF relay function. After receiving the second information, the relay apparatus decodes the second information, re-encodes a decoding result, and forwards re-encoded second information to a destination node.

The second time unit is determined based on the first duration and the first time unit. For example, a quantity of time units between the second time unit and the third time unit is determined based on the first duration, for example, the quantity of time units corresponding to the first duration. The quantity of time units corresponding to the first duration may be, for example, a quotient of the first duration and the duration of one time unit.

The third time unit is a time domain resource for uplink transmission, and an index value of the third time unit is equal to that of the first time unit.

For example, the first time unit is a slot n. In this case, the third time unit is also a slot n. An index of the third time unit is the same as an index of the first time unit. The second time unit may be determined based on (n+First duration). For example, the second time unit may be a slot corresponding to (n+First duration), and the slot corresponding to (n+First duration) may also be referred to as a slot (n+First duration). In this embodiment of this application, description is provided by using an example in which the first duration is △T. A unit of △T may be a slot, or may be another unit, for example, a unit of time (for example, millisecond). The second time unit may be a slot (n+△T), or the second time unit may be a slot (n+△T+S₀). In this embodiment of this application, S₀ may be a predefined value or a value configured by the network apparatus. A unit of S₀ may be a slot, or may be another unit, for example, a time unit (for example, millisecond). A meaning of the parameter at other locations are the same as this, and is not repeatedly described.

In this embodiment of this application, units of parameters (for example, n, △T, and S₀) used for calculating the second time unit may be consistent or inconsistent. When the units of these parameters are inconsistent, the units of these parameters may be converted into consistent units for calculation. For example, the units of the parameters (for example, n, △T, and S₀) used for calculating the second time unit may be slot lengths corresponding to a same subcarrier spacing. In this case, the slot (n+△T) may be understood as a slot whose index number is (n+△T), and the slot (n+△T+S₀) may be understood as a slot whose index number is (n+△T+S₀). The units of the parameters (for example, n, △T, and S₀) used for calculating the second time unit may alternatively be a unit of time (for example, millisecond), or may be slot lengths corresponding to different subcarrier spacings (slot lengths corresponding to different subcarrier spacings are different). In this case, the slot (n+△T) may be understood as a slot of a time (or referred to as a time domain resource) corresponding to (Time corresponding to the slot n+△T). Similarly, the slot (n+△T+S₀) may be understood as a slot of a time (or referred to as a time domain resource) corresponding to (Time corresponding to the slot n+△T+S₀). In this embodiment of this application, a slot calculation formula also exists in another location. For a unit of each parameter used for slot calculation and a meaning of a slot, refer to descriptions herein. Details are not described again.

Because the relay apparatus determines, based on the first duration, the second time unit used for forwarding the information, the second time unit determined by the relay apparatus is later than the first time unit in a time series relationship, and meets a time series relationship of forwarding an uplink signal, so that a success rate of forwarding information by the relay apparatus can be improved.

In still another possible implementation, the second time unit is further determined based on a value of K and/or a time unit offset value. The value of K is associated with a delay of processing uplink information by the relay apparatus and/or a delay of processing downlink information by the relay apparatus. Alternatively, K is a specified value. The delay of processing the uplink information and/or the downlink information by the relay apparatus may include, for example, a time required for adjusting a beam direction and a data processing time. The delay of processing the uplink information by the relay apparatus may be equal to or unequal with the delay of processing the downlink information by the relay apparatus. The first information further indicates the time unit offset value. The time unit offset value in this embodiment of this application may be denoted as slot_offset.

The quantity of time units between the second time unit and the third time unit is determined based on a sum of the first duration, the value of K, and the time unit offset value. For example, the first time unit is a downlink slot n. In this case, the third time unit is an uplink slot n. For example, if the first duration is △T slots, the second time unit may be a slot (n+△T+K+slot_offset). Alternatively, the second time unit may be a slot (n+△T+K+slot_offset+S₀).

In this embodiment of this application, units of parameters (for example, n, △T, K, slot_offset, and S₀) used for calculating the slot may be consistent or inconsistent. When the units of these parameters are inconsistent, the units of these parameters may be converted into consistent units for calculation. In a possible implementation, the units of the parameters (for example, n, △T, K, slot_offset, and S₀) used for calculating the slot may be slot lengths corresponding to a same subcarrier spacing. In this case, a slot A described in this embodiment of this application may be understood as a slot whose index number is A. For example, the slot (n+△T+K+slot_offset) may be understood as a slot whose index number is (n+△T+K+slot_offset). The slot (n+△T+K+slot_offset+S₀) may be understood as a slot whose index number is (n+△T+K+slot_offset+S₀). In another possible implementation, the units of the parameters (for example, n, △T, K, slot_offset, and S₀) used for calculating the slot may alternatively be units of time (for example, millisecond). In this case, a slot A described in this embodiment of this application may be understood as a slot of a time (or a time domain resource) corresponding to A. For example, the slot (n+△T+K+slot_offset) may be understood as a slot of a time (or referred to as a time domain resource) corresponding to (Time corresponding to the slot n+△T+K+slot_offset). Similarly, the slot (n+△T+K+slot_offset+S₀) may be understood as a slot of a time (or referred to as a time domain resource) corresponding to (Time corresponding to the slot n+△T+K+slot_offset+S₀). In another possible implementation, the units of the parameters (for example, n, △T, K, slot_offset, and S₀) used for calculating the slot may also be slot lengths corresponding to different subcarrier spacings. In this case, the parameters may be multiplied by conversion coefficients to obtain slot lengths of a same subcarrier spacing. The slot (n+△T+K+slot_offset) described in this embodiment of this application may be understood as a slot index number when (n+△T+K+slot_offset) is converted with a unified slot length, and the slot (n+△T+K+slot_offset+S₀) may be understood as a slot index number when (n+△T+K+slot_offset+S₀) is converted with a unified slot length. In this embodiment of this application, a slot calculation formula also exists in another location. For a unit of each parameter used for slot calculation and a meaning of a slot, refer to descriptions herein. Details are not described again. The slot A in this segment is an example, and A may be an expression of any formula. For example, A may be (n+△T+K+slot_offset). For another example, A may be (n+△T+K+slot_offset+S₀). In subsequent content, A in the slot A may alternatively be another formula.

In another possible implementation, the second time unit may be a slot (n+△T+K+2^{u}*slot_offset). For related descriptions of the units of the parameters in the formula, refer to the foregoing related descriptions of the units of the parameters used for calculate the slot. Details are not described again. Herein, 2^{u} means to convert a time length represented by slot_offset, because slot lengths (subcarrier spacings) in downlink (downlink, DL) and uplink (uplink, UL) are different. For example, a time unit used by slot_offset may be a slot length (that is, 1 ms) based on Subcarrier spacing = 15 kilohertz (kilo Hertz, kHz). Therefore, u herein may correspond to a subcarrier spacing for sending uplink information, that is, Subcarrier spacing of uplink information = 2^{u}*15 kHz. In this embodiment of this application, information may also be replaced with a signal, uplink information may also be replaced with an uplink signal, and downlink information may also be replaced with a downlink signal.

In another possible implementation, use of △T in this embodiment of this application may be extended to consideration of different time units. For example, the second time unit may be a slot $\left(\left⌊n∗s1\right⌋+ΔT*s2+K+slot_offset\right)$ or the second time unit may be a slot (n*s1+△T****s***2+K+slot_offset), or the second time unit may be a slot (n+△T****s*2**+K+slot_offset). For related descriptions of the units of the parameters in the formula, refer to the foregoing related descriptions of the units of the parameters used for calculate the slot. Details are not described again. Herein, s1 and s2 may be scaling coefficients, for example, related to a subcarrier spacing. For example, $s 1 = \frac{{2}^{{μ}_{PUSCH}}}{{2}^{{μ}_{PDCCH}}}$, $s 2 = \frac{{2}^{{μ}_{PUSCH}}}{{2}^{{μ}_{Δ T}}}$. Herein, *µ*_{PUSCH} is related to a PUSCH subcarrier spacing, that is, PUSCH subcarrier spacing = *2*^{*µ*_{PUSCH}*}15 kHz. *µ_{PDCCH}*is related to a PDSCH subcarrier spacing, that is, PDSCH subcarrier spacing = 2^{µ*_{PDCCH}**}15 kHz. *µ_{△T}* is related to a subcarrier spacing corresponding to defined △T, that is, Subcarrier spacing corresponding to △T = *2^{µ_{△T}}**15 kHz. In another possible implementation, different scaling coefficients (or conversion coefficients) may be determined for K and slot_offset based on a subcarrier spacing or different time units. For example, in this embodiment of this application, s3 is represented as a scaling coefficient (or conversion coefficient), determined based on a subcarrier spacing or different time units, of K, and s4 is represented as a scaling coefficient (or conversion coefficient), determined based on a subcarrier spacing or different time units, of slot_offset, and the second time unit may be a slot $\left(\left⌊n∗s1\right⌋+ΔT*s2+K*s3+slot_offset*s4\right)$, or the second time unit may be a slot (n*s1+△T*s2+K*s3+slot_offset*s4). In this embodiment of this application, $\left⌊.\right⌋$ may represent flooring, * may represent multiplication, u may be a subcarrier spacing for sending uplink information, and ***n*** is an index number of the first time unit. For definitions of △T, the value of K, and slot_offset, refer to the foregoing descriptions. Details are not described again. For related descriptions of the units of the parameters in these formulas, refer to the foregoing related descriptions of the units of the parameters used for calculate the slot. Details are not described again.

A timing interval between time domain resources of to-be-forwarded information and downlink signaling (for example, the first information) indicating a resource of the to-be-forwarded information can be increased in the solutions provided in this embodiment of this application, to resolve a problem of an insufficient timing offset of a time domain resource of information.

Compared with directly extending a value of the existing parameter K or slot_offset, in the solutions provided in this embodiment of this application, a new parameter: the first duration may be introduced. In this way, in this solution, modification of a parameter range supported by the relay apparatus in a ground scenario can be avoided (that is, modification of the value of K or slot_offset can be avoided), and a terrestrial relay apparatus (in a small-delay scenario) is not required to have a capability of supporting a large-delay scenario, thereby avoiding increasing a capability of the terrestrial relay apparatus. In the solution provided in this embodiment of this application, only a capability of the relay apparatus in the large-delay scenario needs to be added.

In another aspect, the value of K may ensure that the relay apparatus has sufficient time to complete internal signal processing, beam adjustment, and the like. The value of slot_offset may provide more flexibility for forwarding indication information. For example, the relay apparatus may forward the information within a specific time range. In another aspect, the value of K may ensure validity and availability of the value of slot_offset. The "first duration" provided in this embodiment of this application can "resist" impact caused by a large round-trip delay between the relay apparatus and the network apparatus.

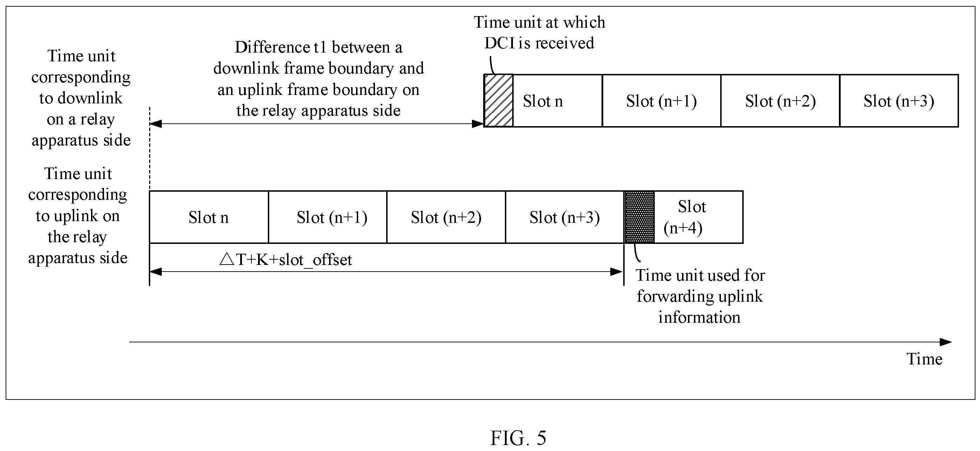

FIG. 5 is an example of a diagram of a relationship between time units corresponding to uplink and downlink on a relay apparatus side according to an embodiment of this application. As shown in FIG. 5, the relay apparatus receives first information in a slot n (for ease of understanding, description is provided by using an example in which the first information is carried in DCI in the figure; and in actual application, the first information may alternatively be carried in other information, that is, the DCI may be replaced with other signaling). The slot n is a time unit in which the first information (for example, the DCI) is received. The first information (for example, the DCI) indicates a resource for uplink forwarding. The relay apparatus needs to determine, based on a slot n, the resource for uplink forwarding. Alternatively, the second time unit may be a slot (n+△T+K+slot_offset). In this embodiment of this application, a value of K is associated with a delay of processing uplink information by the relay apparatus and/or a delay of processing downlink information by the relay apparatus, or K is a specified value. Meanings of the parameter at other locations are the same as this. Related content of the value of K is not repeatedly described. In this embodiment of this application, slot_offset is a time unit offset value, and may be a value specified by the first information (for example, DCI). Meanings of the parameter at other locations are the same as this. Related content of slot_offset is not repeatedly described.

It can be learned from FIG. 5 that, because the relay apparatus determines, based on a first duration, a resource used for forwarding information, even if a delay (for example, a round-trip delay of signal transmission) between the relay apparatus and a network apparatus is relatively large, in a time series relationship, a time domain resource for forwarding the information is not earlier than a time at which the forwarded information is received. In this way, in a large-delay communication scenario, a success rate of forwarding information by the relay apparatus can be improved.

In this embodiment of this application, the first duration may be updated. For example, as the relay apparatus moves, the delay (for example, the round-trip delay of signal transmission) between the relay apparatus and the network apparatus changes, and then the first duration may change accordingly. Therefore, to reduce the delay, the first duration may be updated with a change of the delay, or may be periodically updated. For example, the network apparatus may determine to update the first duration when determining that a delay variation amount between the relay apparatus and the network apparatus is greater than a threshold. In this embodiment of this application, for ease of understanding, two first durations may be respectively referred to as a first duration before the update and a first duration after the update. The first duration before the update is updated, to obtain the first duration after the update.

In a possible implementation, the relay apparatus may send fourth information to the network apparatus. The network apparatus may receive the fourth information. The fourth information indicates location information of the relay apparatus and/or a TA corresponding to the relay apparatus. The relay apparatus may be a satellite device or a chip (or a chip system) inside a satellite device. Therefore, as the relay apparatus moves, the delay between the relay apparatus and the network apparatus changes. In another possible implementation, the relay apparatus has functions of accessing a base station or a previous node to establish a control link and transmit control signaling. When sending information to the base station or the previous node, the relay apparatus uses a TA to adjust timing of forwarding information (for example, uplink information). The TA corresponding to the relay apparatus is related to the round-trip delay (dual-selection transmission delay) between the relay apparatus and the network apparatus, and also changes with the delay between the relay apparatus and the network apparatus. Therefore, the TA reported by the relay apparatus may also reflect the delay between the relay apparatus and the network apparatus, and the network apparatus may also update, based on the TA, the first duration or a quantity of time units corresponding to the first duration. For example, the updated first duration may be the TA, or a quantity of time units corresponding to the updated first duration is a quotient of the TA and a duration of one time unit.

The network apparatus may determine third information based on fourth information. The network apparatus may send the third information to the relay apparatus, and correspondingly, the relay apparatus may receive the third information. The third information is used for determining the updated first duration. The updated first duration is used by the relay apparatus to determine a time unit of subsequent to-be-forwarded information. The updated first duration is associated with the delay (for example, an updated round-trip delay) between the relay apparatus and the network apparatus.

In a possible implementation, the third information includes information indicating the updated first duration. The information indicating the updated first duration may include information about the updated first duration, or include the quantity of time units corresponding to the updated first duration. The relay apparatus directly determines, based on the third information, the updated first duration or the quantity of time units corresponding to the updated first duration. In this example, the network apparatus may calculate the updated first duration. In a possible implementation, $ΔT update value = \left⌈RTD\left(Network apparatus, Relay apparatus\right)/slot_duration\right⌉$, or $ΔT update value = TA / slot _ duration$ , where △T update value represents the updated first duration, ┌ ┐ represents ceiling, and RTD (Network apparatus, Relay apparatus) represents the delay (for example, an updated round-trip delay of signal transmission) between the relay apparatus and the network apparatus, TA represents the TA of the relay apparatus (for example, may be an updated TA of the relay apparatus), and slot_duration represents a length of one time unit.

In another possible implementation, the third information includes information indicating a difference between the first duration before the update and the first duration after the update. The difference may be a time difference between the first duration before the update and the first duration after the update, or may be a difference between a quantity of time units corresponding to the first duration before the update and a quantity of time units corresponding to the first duration after the update. In this example, the network apparatus may calculate the difference between the first duration before the update and the first duration after the update. The relay apparatus may determine, based on the difference, the updated first duration or the quantity of time units corresponding to the updated first duration. For example, First duration after the update = First duration before the update - △S. For another example, First duration after the update = First duration before the update + △S. △S may be the difference between the first duration before the update and the first duration after the update. For another example, Quantity of time units corresponding to the first duration after the update = Quantity of time units corresponding to the first duration before the update - Quantity of time units corresponding to △S. For another example, Quantity of time units corresponding to the first duration after the update = Quantity of time units corresponding to the first duration before the update + Quantity of time units corresponding to △S. A relationship between parameters in these examples may be represented as the following formula: △S = △T initial value - △T update value, or △S = △T update value - △T initial value, where △T initial value may be understood as the first duration before update, and △T update value may be understood as the first duration after the update. The relay apparatus may also calculate the updated first duration based on the relationship, for example, △T update value = △T initial value - △S, or △T update value = △S + △T initial value.

In this embodiment of this application, signaling or information (for example, the first information, the information indicating the first duration, or the third information) sent by the network apparatus may be sent in a plurality of manners. For example, any one of the pieces of signaling or information may be carried in at least one type of broadcast information such as a system information block (system information block, SIB) 1, a SIB 19, other system information (other system information, OSI), a master information block (master information block, MIB), a physical broadcast channel (physical broadcast channel) message, or the like. The signaling or information (for example, the first information, the information indicating the first duration, or the third information) sent by the network apparatus is sent by the network device to the relay apparatus in a broadcast, multicast, or unicast manner. Sending the foregoing signaling to the relay apparatus in the broadcast or multicast manner can avoid scheduling different resources for different relay apparatuses to send the foregoing signaling. In this way, signaling overheads for resource scheduling are reduced, and system scheduling complexity is reduced.

In another possible implementation, if the signaling or information (for example, the first information, the information indicating the first duration, or the third information) sent by the network apparatus is sent in a radio resource control (radio resource control, RRC) connection setup phase and a subsequent communication process, the signaling or information may be carried in RRC signaling (for example, an RRC setup (RRCsetup) message, RRC reconfiguration signaling (RRCReconfiguration), and RRC resume signaling (RRCResume)), DCI, group DCI, a medium access control (media access control, MAC) control element (control element, CE), and a timing advance command (timing advance command, TAC). The signaling or information (for example, the first information, the information indicating the first duration, or the third information) sent by the network apparatus may be indicated in an information or table manner, or may be sent to the relay apparatus in a unicast or multicast manner along with data transmission or on a separately allocated PDSCH bearer. An advantage of sending the signaling to the relay apparatus separately or in groups is that a parameter value of each relay apparatus/each group of relay apparatuses can be flexibly controlled, and different parameter values are configured for the relay apparatus based on different locations or different regions of the relay apparatus, to achieve a purpose of optimizing system parameters and optimizing communication performance of the relay apparatus/system communication performance. For example, different values of the first duration may be configured for the relay apparatus based on different locations of the relay apparatus, to optimize a forwarding delay of each relay apparatus/each group of relay apparatuses and improve system communication efficiency.

The first duration in this embodiment of this application may be a newly defined value. In another possible implementation, the first duration may reuse a scheduling offset value. For example, the first duration is determined based on the scheduling offset value. In this embodiment of this application, the scheduling offset value is represented as K_{offset}. For example, the first duration is K_{offset}, or the quantity of time units corresponding to the first duration is a quantity of time units corresponding to K_{offset}. For another example, First duration = K_{offset} + Adjustment value, or First duration = K_{offset} - Adjustment value. The adjustment value may be predefined in a protocol, or may be a value indicated by the network apparatus to the relay apparatus. Alternatively, the first duration may be another calculation formula such as a product of K_{offset} and the adjustment value. Because the relay apparatus may reuse K_{offset} as the first duration, the network apparatus does not need to additionally send signaling to configure the first duration, thereby reducing signaling overheads.

K_{offset} may be sent by the network apparatus in a broadcast manner, for example, sent to a terminal apparatus in a broadcast manner. K_{offset} may be associated with a delay (for example, a round-trip delay) between the network apparatus and the terminal apparatus. Therefore, the second time unit determined by the relay apparatus based on K_{offset} may also be more appropriate.

In this embodiment of this application, K_{offset} may also be updated. For example, as the delay between the terminal apparatus and the network apparatus changes, K_{offset} may also be updated accordingly. The relay apparatus may calculate, based on updated K_{offset}, a subsequent time unit used for forwarding information. For a solution for determining updated Koffset, refer to the foregoing solution for determining the updated first duration. The two solutions are similar. Details are not described again.

A unit of a parameter such as the first duration, K_{offset}, the value of K, or the time unit offset value in this embodiment of this application may be flexibly set, for example, may be set to a quantity of time units, or may be set to a time unit such as millisecond. For a related definition of the value of K, refer to the foregoing description. Details are not described again. For example, a time unit of K_{offset} may be millisecond, or may be a unit of a slot length of a 15 kHz subcarrier spacing. In a calculation formula, units of parameters can be converted. For example, when the time unit of K_{offset} is inconsistent with that of another parameter in the formula, unit conversion may be performed by multiplying a coefficient. Details are not described below.

In this embodiment of this application, K_{offset} may be further used in another scenario. For example, K_{offset} is further used to perform at least one of the following: used to adjust sending timing of information of the terminal apparatus; used to adjust sending timing of feedback information of the terminal apparatus; used to adjust sending timing of a reference signal of the terminal apparatus; or used to adjust a random access occasion of the terminal apparatus.

The following uses an example to describe a scenario in which K_{offset} is used. (1) There is a problem that a scheduling delay of a hybrid automatic repeat request-acknowledgment instruction (hybrid automatic repeat request (hybrid automatic repeat request, HARQ)-acknowledgment (acknowledgment, ACK)) corresponding to physical downlink shared channel (physical downlink shared channel, PDSCH) data fed back by the terminal apparatus is insufficient. (2) There is a problem that a scheduling delay of scheduling physical uplink shared channel (physical uplink shared channel, PUSCH) data by using a DCI instruction on a network side is insufficient.

After receiving PDSCH data sent by the network apparatus, the terminal apparatus needs to send hybrid automatic repeat request-acknowledgment (HARQ ACK) or negative acknowledgment (NACK) to feed back whether decoding succeeds. If the terminal apparatus receives the PDSCH data in a downlink slot n₀, the UE needs to feed back ACK/NACK information in an uplink slot of (n₀+K₁+K_{offset}). As shown in FIG. 5, a maximum value of timing advance adjustment that can be performed by the UE may be (K₁+K_{offset}-1) slot lengths. A maximum value of K₁ is 15. When a subcarrier spacing (subcarrier spacing, SCS) is 15 kHz, and one slot length is 1 ms, a maximum timing advance adjustment amount that can be implemented by the UE is (14 ms+K_{offset}).

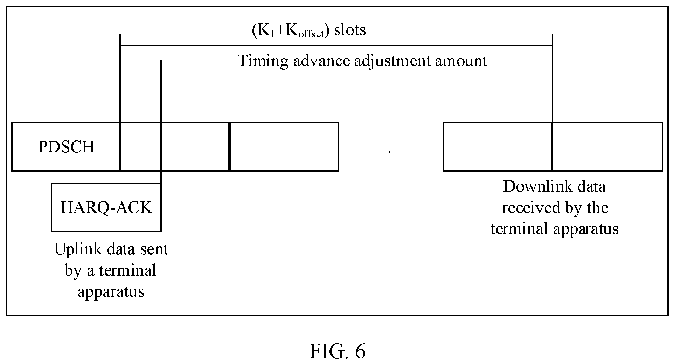

In a satellite communication scenario, the round-trip delay between the terminal apparatus and the network apparatus is greater than 14 ms, that is, the terminal apparatus needs to perform timing advance adjustment on uplink data is also greater than 14 ms. Therefore, (14 ms+K_{offset}) slot lengths may be a sufficient time length provided by the terminal apparatus for timing advance adjustment, to meet a requirement of the terminal apparatus on a timing advance for compensating for the round-trip delay in a large-delay transmission scenario (for example, an NTN scenario). FIG. 6 is an example of a diagram of a relationship between time units corresponding to uplink and downlink on a relay apparatus side. As shown in FIG. 6, a timing advance adjustment amount of uplink data sent by a terminal apparatus is not greater than (K₁+K_{offset}-1) slot lengths, and the terminal apparatus may deliver ACK information to a network apparatus in time. It can be learned from this solution that the K_{offset} parameter is introduced in this embodiment of this application, so that a slot in which the terminal apparatus sends the HARQ-ACK information can be adjusted by using the K_{offset} value, and a scheduling delay for feeding back the ACK/NACK by the terminal apparatus is increased, so that the UE has a sufficient time length to perform timing advance adjustment.

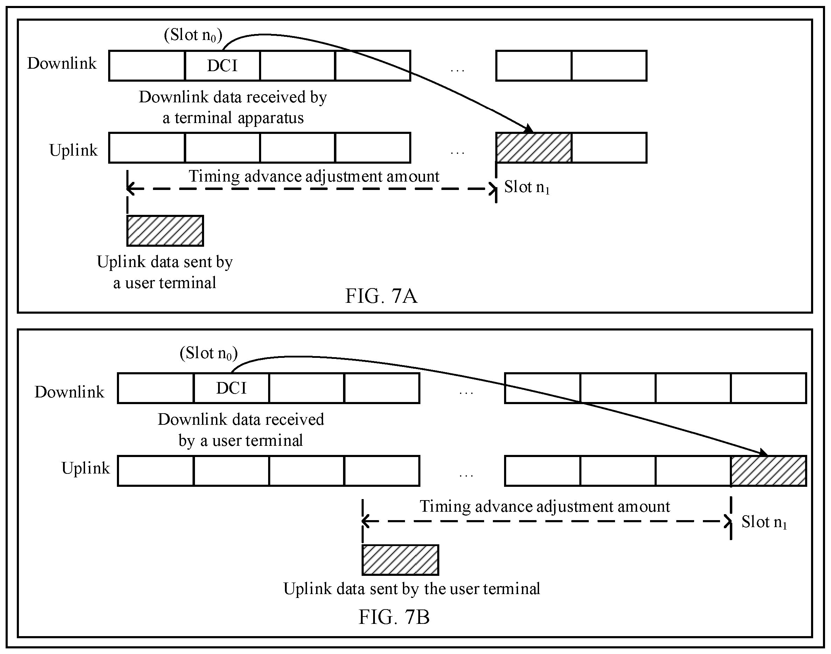

The foregoing describes a scenario in which K_{offset} is introduced into feeding back the HARQ-ACK/NACK. Similarly, when uplink PUSCH data is scheduled through a DCI instruction, a problem that a scheduling delay is less than a TA adjustment length also occurs. FIG. 7A and FIG. 7B are examples of diagrams of a relationship between time units corresponding to uplink and downlink on a relay apparatus side according to an embodiment of this application. For ease of understanding, DCI is used as an example in the figure for description. In actual application, the DCI may also be replaced with other signaling. As shown in FIG. 7A, the terminal apparatus receives, in a downlink slot n₀, an uplink grant (UL grant) of scheduling by using DCI, and sends PUSCH uplink data in a corresponding uplink slot n₁ (the slot n₁ is a $slot \left(\left⌊{n}_{0}∗\frac{{2}^{{μ}_{PUSCH}}}{{2}^{{μ}_{PDCCH}}}\right⌋+{K}_{2}\right)$). In this embodiment of this application, *µ_{PUSCH}* and ***µ_{PDCCH}*** are related to subcarrier spacings of a PUSCH and a physical downlink control channel (physical downlink control channel, PDCCH). For example, PUSCH subcarrier spacing = 2^{*µ*_{PUSCH}} *15 kHz, and PDCCH subcarrier spacing = 2^{*µ*_{PDCCH}} *15 kHz. Meanings of this parameter at other locations in this embodiment of this application are the same as that of this parameter herein. Details are not repeatedly described. In this embodiment of this application, ┌ ┐represents flooring. Meanings of the symbol at other locations in this embodiment of this application are the same as that of the symbol herein. Details are not repeatedly described. In this embodiment of this application, ***K*₂ = 0, ... , 32,** and a value of K₂ is indicated by a DCI instruction. Meanings of the symbol at other locations in this embodiment of this application are the same as that of the symbol herein. Details are not repeatedly described. "*" in the formulas in embodiments of this application indicates multiplication, and meanings of the symbol at other locations are the same as that of the symbol herein. Details are not repeatedly described. For related descriptions of the units of the parameters in the formula, refer to the foregoing related descriptions of the units of the parameters used for calculate the slot. Details are not described again.

When a time length of a timing advance adjustment amount for sending uplink data is greater than (K₂-1) slot lengths, the terminal apparatus cannot send data in an uplink slot n₁, and the network apparatus cannot ensure according to an agreement that the network apparatus receives corresponding uplink PUSCH data in an uplink slot n₁. The value of K₂ ranges from 0 to 32. When uplink subcarrier spacings are different, K₂ slot lengths are also different. As shown in Table 1, when SCS = 15 kHz, a maximum value of the K₂ slot lengths is 32 milliseconds (millisecond, ms). According to the foregoing analysis, it can be learned that, under conditions of different subcarrier spacings, a maximum value of timing advance adjustment that can be performed on PUSCH data when the terminal apparatus sends PUSCH data scheduled through DCI is 32 ms. In a GEO scenario, a maximum round-trip delay is 541.46 ms, and a value of K₂ cannot meet a timing advance requirement. Similarly, in a LEO-1200 scenario, when a subcarrier spacing is 30 kHz, a maximum value of K₂ slot lengths is 16 ms, and a maximum round-trip delay in the LEO-1200 scenario is greater than 20 ms. Therefore, the value of K₂ cannot meet a requirement for a timing advance adjustment value in this scenario.

**Table 1: Different subcarrier spacings correspond to different K₂ slot lengths**

| Uplink subcarrier spacing | Maximum value of the K₂ slot lengths |
|---|---|
| 15 kHz | 32 ms |
| 30 kHz | 16 ms |
| 60 kHz | 8 ms |
| 120 kHz | 4 ms |

Similar to the HARQ-ACK/NACK feedback scenario, the timing offset K_{offset} may be introduced into this embodiment of this application, so that there is a sufficient time length between receiving downlink DCI signaling by the terminal apparatus and sending uplink PUSCH data. Therefore, the terminal apparatus has a sufficient scheduling delay for sending uplink data to perform TA adjustment. As shown in FIG. 7B, after K_{offset} is added, the terminal apparatus sends a PUSCH in an uplink slot ***Kₛ*** (the slot ***Kₛ*** is $slot \left(\left⌊{n}_{0}⋅\frac{{2}^{{μ}_{PUSCH}}}{{2}^{{μ}_{PDCCH}}}\right⌋+{K}_{2}+{K}_{offset}\right.$. $\left.\frac{{2}^{{μ}_{PUSCH}}}{{2}^{{μ}_{{K}_{offset}}}}\right)$). For related descriptions of the units of the parameters in the formula, refer to the foregoing related descriptions of the units of the parameters used for calculate the slot. Details are not described again. "*" in the formulas in embodiments of this application indicates multiplication, and meanings of the symbol at other locations are the same as that of the symbol herein. Details are not repeatedly described. $\frac{{2}^{{μ}_{PUSCH}}}{{2}^{{μ}_{PDCCH}}}$ and $\frac{{2}^{{μ}_{PUSCH}}}{{2}^{{μ}_{{K}_{offset}}}}$ are coefficients adjusted due to different time units. *µK*_{offset} indicates a subcarrier corresponding to K_{offset}, that is, Subcarrier corresponding to K_{offset} = 2*^{µK_{offset}}**15 kHz. For other parameters and symbols in the formula, refer to the descriptions of the foregoing related content. Details are not repeatedly described. In this solution, a delay of scheduling uplink data by using DCI is increased. In this way, it can be ensured that the UE has a sufficient time interval for TA adjustment.

In addition to the application scenario of K_{offset} described in the foregoing content, this embodiment of this application further provides some other application scenarios of K_{offset}. The following separately describes the application scenarios.

### (1) PUSCH sending timing scheduled through DCI

If the UE receives uplink grant/scheduling information in a downlink slot n₀, PUSCH data of the UE needs to be:
sent in an uplink slot ( $\left⌊{n}_{0}⋅\frac{{2}^{{μ}_{PUSCH}}}{{2}^{{μ}_{PDCCH}}}\right⌋ + {K}_{2} + {K}_{offset}$). For meanings of parameters and symbols in the formula, refer to the descriptions of the foregoing related content. Details are not repeatedly described. For related descriptions of the units of the parameters in the formula, refer to the foregoing related descriptions of the units of the parameters used for calculate the slot. Details are not described again.

In addition to the DCI, there is another manner of scheduling the PUSCH: configured grant (configured grant). K_{offset} also needs to be used in this scheduling manner.

For example, the manner is an uplink resource grant of a configured grant type 2 (configured grant type 2). After the terminal apparatus receives an uplink grant message, configured by a network side, of the configured grant type 2, K_{offset} is used when the terminal apparatus sends uplink data (PUSCH) on a corresponding resource. For example, the UE sends the uplink data at a first PUSCH transmission opportunity after a time length indicated by K_{offset} after receiving the uplink grant message of the configured grant type 2.

### (2) An RAR carried on a downlink PDSCH schedules uplink PUSCH data.

The UE receives an RAR message carried on the PDSCH. A downlink PDSCH RAR message ends in a slot n₀. The UE sends a corresponding scheduled PUSCH in a slot (n₀+k₂+△+2^{u} K_{offset}), where 2^{u} means conversion on a time length indicated by K_{offset}, due to different slot lengths (different subcarrier spacings) of DL and UL. In a standard, a time unit used by K_{offset} is defined based on a slot length (that is, 1 ms) corresponding to Subcarrier spacing = 15 kHz. Therefore, u herein may be a subcarrier spacing for sending an uplink signal. For example, the time unit used by K_{offset} is indicated based on the slot length (that is, 1 ms) of a subcarrier spacing of 15 kHz, and u is related to a subcarrier spacing of an uplink signal, that is, Uplink subcarrier spacing = 2^{u}*15 kHz. In this embodiment of this application, Δ is a value agreed on in a protocol, and meanings of the symbol at other locations are the same as that of the symbol herein. Details are not repeatedly described. For other parameters and symbols in the formula, refer to the descriptions of the foregoing related content. Details are not repeatedly described. For related descriptions of the units of the parameters in the formula, refer to the foregoing related descriptions of the units of the parameters used for calculate the slot. Details are not described again.

In a two-step random access process, the terminal apparatus sends information A (message, MsgA) to the network apparatus side. If the network apparatus side fails to decode the entire MsgA message (for example, only succeeds in decoding a preamble (preamble)), the network apparatus side sends a fallback RAR message (fallbackRAR) to the terminal apparatus. After receiving PDSCH data that carries an RAR message, the terminal apparatus needs to send, on an uplink PUSCH, a random access message 3 (message 3, Msg3) scheduled through a fallback RAR message (fallbackRAR). For timing of sending the message 3, also refer to the foregoing RAR scheduling message 3 to introduce K_{offset}.

### (3) Sending timing of a physical uplink control channel (physical uplink control channel, PUCCH) that carries HARQ-ACK

When the terminal apparatus receives PDSCH data or semi-persistent scheduling (Semi-Persistent Scheduling, SPS) PDSCH data in a downlink slot ***n*₀,** the terminal apparatus needs to feed back HARQ-ACK in a slot (n₀+K₁+K_{offset}) of an uplink PUCCH, where K₁ is a value obtained based on a PDSCH-to-HARQ-timing (timing)-indicator (indicator) instruction index table (for example, a table for dl-DataToUL-ACK signaling transmission) in DCI. For related descriptions of the units of the parameters in these formulas, refer to the foregoing related descriptions of the units of the parameters used for calculate the slot. Details are not described again.

In the two-step random access process, after receiving MsgB sent by the network side, the terminal apparatus needs to feed back a corresponding PUCCH that carries a HARQ-ACK/negative-acknowledgment (negative-acknowledgment, NACK) indicator to the network side, and K_{offset} also needs to be used for timing of sending the HARQ-ACK/NACK.

### (4) PUSCH sending timing carrying CSI

When the terminal apparatus receives, in a downlink slot n₀, DCI requested by channel state information (channel state information, CSI), the terminal apparatus needs to send CSI in an uplink PUSCH slot (n₀+K+K_{offset}). In the formula, K may be selected by using a DCI instruction. For other parameters and symbols in the formula, refer to the descriptions of the foregoing related content. Details are not repeatedly described. For related descriptions of the units of the parameters in the formula, refer to the foregoing related descriptions of the units of the parameters used for calculate the slot. Details are not described again.

### (5) CSI reference resource timing

When the terminal apparatus needs to send a CSI report in an uplink slot n', a CSI reference resource needs to be sent to the terminal apparatus in a downlink slot (n-n_{csi_ref}-K_{offset}). The slot n may be calculated according to the following formula: $n = \left⌊n′⋅\frac{{2}^{{μ}_{DL}}}{{2}^{{μ}_{UL}}}\right⌋ .$

In this embodiment of this application, n_{csi_ref} is a value that is agreed on in a protocol and that is related to a CSI report type, and ***µ_{DL}** and **µ_{UL}*** are related to an uplink data subcarrier spacing and a downlink data subcarrier spacing. For details, refer to the foregoing descriptions of ***µ_{PUSCH}*** and ***µ_{PDCCH}.*** For other parameters and symbols in the formula, refer to the descriptions of the foregoing related content. Details are not repeatedly described. For related descriptions of the units of the parameters in the formula, refer to the foregoing related descriptions of the units of the parameters used for calculate the slot. Details are not described again.

### (6) Aperiodic sounding reference signal (sounding reference signal, SRS) transmission timing

The terminal apparatus receives, in a downlink slot n₀, a DCI instruction for triggering an aperiodic sounding reference signal (sounding reference signal, SRS). Each time an SRS resource group is triggered, the terminal apparatus sends an SRS signal in an uplink slot corresponding to a slot ( $\left⌊{n}_{0}⋅{2}^{\frac{{μ}_{SRS}}{{μ}_{PDCCH}}}\right⌋ + {K}_{3} + {K}_{offset}$). A value of K₃ is configured by using a higher-layer parameter offset value (the offset value offset, where offset has a different meaning from slot_offset) for triggering an SRS resource group (the value of K₃ may be the same as or different from the foregoing value of K, K₃ is used in the formula herein to be distinguished from the foregoing value of K, and K₃ is also replaced with another parameter, for example, may be replaced with K). ***µ_{SRS}** and **µ_{PDCCH}*** are related to a subcarrier spacing for sending an SRS and a subcarrier spacing of a PDCCH. Refer to the descriptions of ***µ_{PUSCH}*** and ***µ_{PDCCH}*** above. For other parameters and symbols in the formula, refer to the descriptions of the foregoing related content. Details are not repeatedly described. For related descriptions of the units of the parameters in the formula, refer to the foregoing related descriptions of the units of the parameters used for calculate the slot. Details are not described again.

### (7) A PDCCH command triggers a random access process.

The network side indicates/configures a random access occasion to the terminal apparatus through a PDCCH command (a random access occasion is randomly selected at equal probability from consecutive physical random access channel (physical random access channel, PRACH) occasions (occasions) through medium access control (medium access control, MAC) entity signaling). The terminal apparatus determines a next available random access occasion according to the indication. After the indicated time length of K_{offset} after the terminal apparatus receives a final symbol (symbol) of a PDCCH command (after K_{offset} slot lengths if an uplink slot length is used as a unit), the terminal apparatus determines a next available random access occasion according to the PDCCH command (MAC entity signaling), and sends a random access signal (for example, a random access preamble) on the random access occasion.

In addition, a time interval between a first symbol of a random signal sent by the terminal apparatus on the determined random access occasion and the final symbol of the received PDCCH command needs to be greater than or equal to **(N_{*T*,2} + Δ_{BWPSwitching} + Δ_{Delay} + *T*_{switch})** milliseconds. Herein, **N_{T,2}** represents a time length of N₂ symbols, and the time length is a capability of the terminal apparatus for a PUSCH preparation time. It is assumed that a subcarrier spacing is a minimum subcarrier spacing configuration in a subcarrier spacing configuration of the PDCCH command and a subcarrier spacing configuration of random access transmission. **Δ_{BWPSwitching} =0** if an activated uplink bandwidth part (Bandwidth Part, BWP) does not change. In other cases, a value of **Δ_{BWPSwitching}** configured on the network side or a value of **Δ_{BWPSwitching}** specified in a protocol is used. If a used frequency range is a frequency range (frequency response, FR) 1, **Δ_{Delay} = 0.5** ms. If a used frequency range is FR2, **Δ_{Delay} = 0.25** ms (it is generally considered that FR1 represents a frequency range not greater than 6 GHz, and FR2 represents a frequency range greater than 6 GHz and less than 52.6 GHz). **T_{switch}** is a conversion interval time, and is configured by the network side or specified in a protocol.

In this application, the time unit of K_{offset} is provided by using an example of using an (uplink/downlink) slot length as a time unit. It may be understood that K_{offset} may alternatively be in another unit. For example, millisecond is used as a time length unit. If a time length unit of millisecond is used, use descriptions of K_{offset} in various scenarios also need to be modified accordingly. For example, a scenario of PUSCH sending timing scheduled through an RAR grant is used as an example.

The terminal apparatus receives, in the downlink slot n₀, PDSCH data that carries an RAR message. The terminal apparatus needs to send, in an uplink PUSCH slot (*n*₀+K₂+Δ_{offset}/2^{µ_{UL}}), a random access message 3 (message 3) scheduled through an RAR. For related descriptions of the units of the parameters in these formulas, refer to the foregoing related descriptions of the units of the parameters used for calculate the slot. Details are not described again. Herein, Δ is a value agreed on in a protocol. The reason for modifying the descriptions is as follows: If the time unit of K_{offset} is ms, and an uplink slot length is related to an uplink subcarrier spacing, that is, related to µ_{UL}, a length of K_{offset} ms is equal to K_{offset}/(2^{µ_{UL}}) slot lengths. Similarly, if K_{offset} is in a unit of ms, description of K_{offset} in another application scenario may be replaced with K_{offset}/(2^{µ_{UL}}) or K_{offset}/(2^{µ_{UL}}). For K_{offset} in another unit, K_{offset} only needs to be converted into a quantity of corresponding slot length units. Alternatively, another parameter indicating a slot length may be converted in a time unit that is the same as that used by K_{offset}. A principle is similar to the foregoing description. Details are not repeatedly described. For other parameters and symbols in the formula, refer to the descriptions of the foregoing related content. Details are not repeatedly described.

In another possible implementation of this embodiment of this application, the first information indicates at least one fourth time unit. The fourth time unit indicated by the first information is a time unit that can be used for sending (or forwarding) information. In this embodiment of this application, the relay apparatus may select, based on the first duration, one or more appropriate fourth time units from the configured fourth time units to send (or forward) information (the selected one or more fourth time units are the second time unit). The second time unit is selected from the at least one fourth time unit. The at least one fourth time unit may be a periodic resource, or may be an aperiodic resource. There may be one or more second time units.

For example, the second time unit belongs to a fourth time unit that meets a first condition. The first condition includes: a quantity of time units between a time domain start location of the fourth time unit and the third time unit is greater than or equal to the first duration, or the sum of the first duration, the value of K, and the time unit offset value. The third time unit is a time domain resource for uplink transmission, and the index value of the third time unit is equal to that of the first time unit.

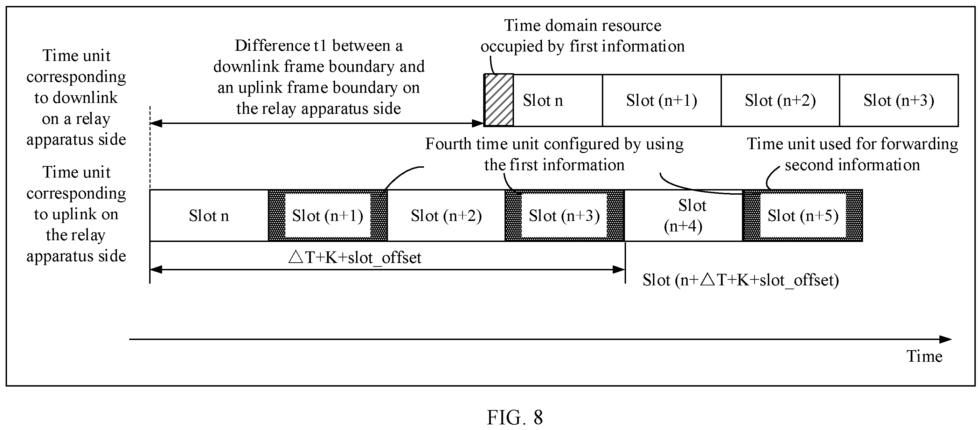

The following gives an example with reference to FIG. 8. FIG. 8 is an example of a diagram of a relationship between time units corresponding to uplink and downlink on a relay apparatus side according to an embodiment of this application. For example, the first time unit is a slot n, the first information is received in the slot n, and the third time unit is the slot n. The first duration is denoted as △T, and the time unit offset value is denoted as slot_offset. The first information indicates that a plurality of fourth time units are respectively a slot (n+1), a slot (n+3), and a slot (n+5). The first information may alternatively indicate more fourth time units. The three fourth time units are used as an example in FIG. 8. The slot (n+1), the slot (n+3), and the slot (n+5) are time domain resources that are configured by the network apparatus for the relay apparatus and that can be used for forwarding information. However, because the relay apparatus receives the first information in the slot n, the relay apparatus needs to forward information (for example, second information) in the fourth time unit that meets the first condition. For example, as shown in FIG. 8, the relay apparatus needs to start to forward the information in a slot (n+△T+K+slot_offset) and a fourth time unit (for example, the slot (n+5)) in a subsequent slot. The slot (n+5) is a slot that earliest meets the first condition. The time unit used for forwarding the information is the second time unit, and the second time unit belongs to the fourth time unit. The slot (n+1) and the slot (n+3) do not belong to the second time unit, and cannot be used for forwarding the second information.

In this example, the slot (n+△T+K+slot_offset) is a slot (n+4), and the slot (n+4) is not the fourth time unit. Therefore, a 1^{st} second time unit is the slot (n+5) after the slot (n+△T+K+slot_offset). If the slot (n+△T+K+slot_offset) (the slot (n+4)) is the fourth time unit, the slot (n+△T+K+slot_offset) (a slot (n+4)) may be considered as a 1^{st} second time unit, and the slot (n+5) may be considered as a 2^{nd} second time unit.

FIG. 8 is described by using an example in which the first condition is that a quantity of time units between a time domain start location of the fourth time unit and the third time unit is greater than or equal to a sum of the first duration, the value of K, and the time unit offset value. The first condition may alternatively be other content. For example, the second time unit in FIG. 8 is a slot (n+△T) and a fourth time unit after the slot (n+△T), or the second time unit is a slot (n+△T+K) and a fourth time unit after the slot (n+△T+K), or the second time unit is a slot (n+△T+slot_offset) and a fourth time unit after the slot (n+△T+slot_offset), or the second time unit is a slot (n+△T+S₀) and a fourth time unit after the slot (n+△T+S₀), or the second time unit is a slot (n+△T+S₀+K+slot_offset) and a fourth time unit after the slot (n+△T+S₀+K+slot_offset), or the second time unit is a slot (n+△T+S₀+K) and a fourth time unit after the slot (n+△T+S₀+K), or the second time unit is a slot (n+△T+S₀+slot_offset) and a fourth time unit after the slot (n+△T+S₀+slot_offset). For a related solution, refer to the related descriptions in FIG. 8. Details are not repeatedly described. For example, K is related to a capability of the relay apparatus, for example, the value of K is associated with a signal processing capability and/or a beam direction adjustment capability of the relay apparatus. For example, Time length represented by K ≥ Internal processing delay (for example, a DL+UL internal processing delay and/or a beam direction adjustment time) of the relay apparatus. For another example, slot_offset is a slot offset amount. For example, in this scenario, it may be agreed on that slot_offset=0 or slot_offset=1. For descriptions of related parameters such as K, △T, S₀, and slot_offset, refer to the content in FIG. 4, FIG. 5, FIG. 6, or FIG. 7A and FIG. 7B. Details are not repeatedly described herein.

Compared with directly extending a value of the existing parameter K or slot_offset, in the solutions provided in this embodiment of this application, a new parameter: the first duration may be introduced. In this way, in this solution, modification of a parameter range supported by the relay apparatus in a ground scenario can be avoided (that is, modification of the value of K or slot_offset can be avoided), and a terrestrial relay apparatus (in a small-delay scenario) is not required to have a capability of supporting a large-delay scenario, thereby avoiding increasing a capability of the terrestrial relay apparatus. In the solution provided in this embodiment of this application, only a capability of the relay apparatus in the large-delay scenario needs to be added.

In another aspect, the value of K may ensure that the relay apparatus has sufficient time to complete internal signal processing, beam adjustment, and the like. The value of slot_offset may provide more flexibility for forwarding indication information. For example, the relay apparatus may forward the information within a specific time range. In another aspect, the value of K may ensure validity and availability of the value of slot_offset. The "first duration" provided in this embodiment of this application can "resist" impact caused by a large round-trip delay between the relay apparatus and the network apparatus.

It can be learned from FIG. 8 that, because the relay apparatus determines, based on a first duration, a resource used for forwarding information, even if a delay (for example, a round-trip delay of signal transmission) between the relay apparatus and a network apparatus is relatively large, in a time series relationship, a time domain resource for forwarding the information is not earlier than a time at which the forwarded information is received. In this way, in a large-delay communication scenario, a success rate of forwarding information by the relay apparatus can be improved.

In this embodiment of this application, the fourth time unit may be semi-persistently configured, and one or more fourth time units are subsequently activated by using the first information; or the fourth time unit directly takes effect after being configured without being activated. The following separately provides example descriptions by using Implementation 1 and Implementation 2.

### Implementation 1: The first information may be signaling used to activate the at least one fourth time unit.

For example, before sending the first information, the network apparatus sends information used to configure at least one resource set (resource set). Correspondingly, the relay apparatus receives information used to configure and indicate a resource set. The at least one resource set includes a first resource set. The first resource set includes the plurality of fourth time units. The information used to configure the at least one resource set is carried in radio resource control RRC signaling. The network apparatus may subsequently activate/deactivate a specific resource set by using signaling (for example, medium access control (media access control, MAC) control element (control element, CE) signaling). In this embodiment of this application, description is provided by using an example in which the first information is used to activate the first resource set. For example, the first information is carried in medium access control control element MAC CE signaling. In this solution, the network apparatus may preconfigure one or more resource sets, and subsequently activate/deactivate the resource set by using signaling. Because signaling for activating/deactivating the resource set occupies a relatively small quantity of bits, this solution can reduce overheads of subsequent signaling.

For example, the network apparatus configures a maximum of 32 semi-persistent resource sets by using information (for example, RRC signaling) used to configure and indicate one resource set. For example, one resource set may include at least one of a maximum of 128 time domain resources (time resources), beam index (beam index) combinations, SCS indications, and priority flags (priority flags), or a resource periodicity. In another possible implementation, one resource set may further include at least one of the following: a forwarding address, a forwarding path, a forwarding direction (for example, DL/UL), forwarding resource information (for example, frequency domain resource information, a start RB index, and an RB quantity), a transparent forwarding or regenerative (digital) forwarding indication, a forwarding/receiving port number, a forwarding/receiving beam index, or the like.

### Implementation 2: The first information may be signaling used to configure the at least one fourth time unit.

For example, the first information is carried in RRC signaling, and the network apparatus configures the at least one fourth time unit for the relay apparatus by using the first information. These fourth time units do not need to be activated by using MAC CE signaling, and can directly take effect. In this way, flexibility of subsequent resource configuration can be improved, and signaling overheads can also be reduced.

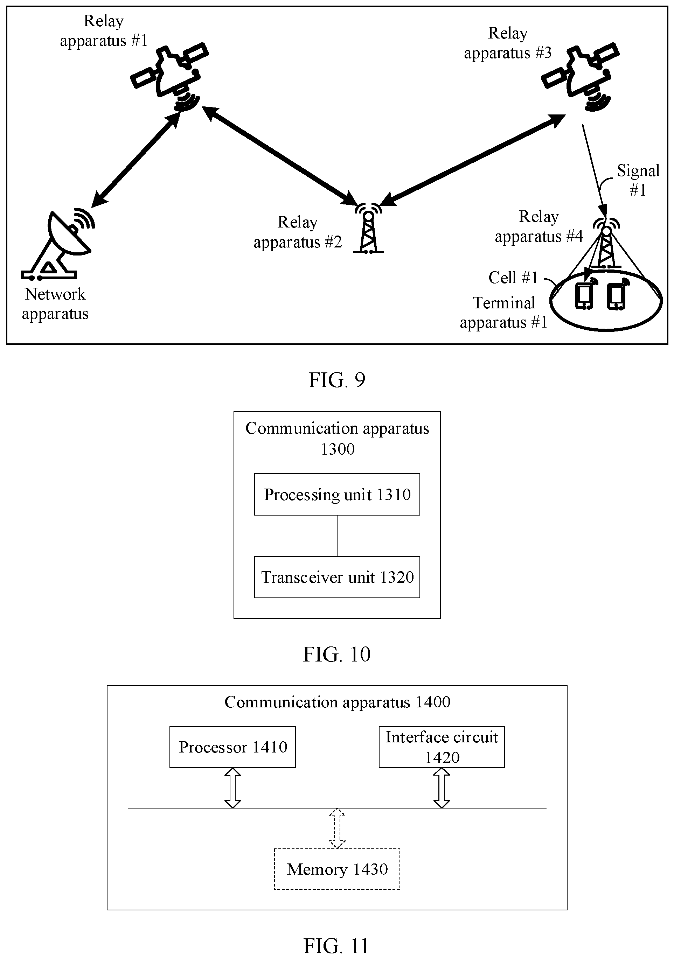

In this embodiment of this application, the relay apparatus may have functions of a network apparatus, or may have functions of a terminal. For example, the relay apparatus may serve as an MT to access another network apparatus. The relay apparatus in this embodiment of this application may alternatively be replaced with a relay apparatus-MT. The relay apparatus and the terminal apparatus may be located in a same cell, or may be located in different cells. FIG. 9 is an example of a diagram of a possible scenario to which an embodiment of this application is applicable. As shown in FIG. 9, for example, a relay apparatus #2 and a terminal apparatus #1 are located in different cells. For another example, a relay apparatus #4 and the terminal apparatus #1 are located in a same cell, and the relay apparatus #4 may also serve as a terminal apparatus to access a network provided by a relay apparatus #3. For example, the relay apparatus #4 as an MT (which, for example, may be referred to as a relay apparatus #4-MT) may receive a signal (for example, a signal #1) of the cell #1, and access the cell #1. Therefore, the relay apparatus #4-MT can receive a broadcast message of the cell #1. The relay apparatus #4 forwards the signal of the cell #1 to the ground (for example, a region in which the terminal apparatus #1 is located). In FIG. 9, the terminal apparatus #1 may receive a broadcast message of the cell #1 that is forwarded by the relay apparatus #4, and the terminal apparatus #1 may also receive the broadcast message of the cell #1. The broadcast message is an example, and the broadcast message may alternatively be replaced with a multicast message, a unicast message, or the like.

Some operations need to be performed between the relay apparatus #4 and a satellite (the relay apparatus #3) or a base station, and the relay apparatus #4 (or the relay apparatus #4-MT) needs to use a scheduling offset value corresponding to the relay apparatus to perform some operations. In this embodiment of this application, the relay apparatus-MT may use a first duration as the scheduling offset value corresponding to the relay apparatus. The first duration may also be used for another purpose. For example, the relay apparatus sends second information based on the first duration. For example, the scheduling offset value (for example, the first duration) corresponding to the relay apparatus (or the relay apparatus-MT) may be used to perform at least one of the following: used to adjust sending timing of information of the relay apparatus (or the relay apparatus-MT); used to adjust sending timing of feedback information of the relay apparatus (or the relay apparatus-MT); used to adjust sending timing of a reference signal of the relay apparatus (or the relay apparatus-MT); or used to adjust a random access occasion of the relay apparatus (or the relay apparatus-MT).

Similarly, some operations need to be performed between the terminal apparatus #1 and a satellite (the relay apparatus #3) or a base station, and the terminal apparatus #1 needs to perform some operations by using a scheduling offset value corresponding to the terminal apparatus. The scheduling offset value corresponding to the terminal apparatus is further used to perform at least one of the following: used to adjust sending timing of information of the terminal apparatus; used to adjust sending timing of feedback information of the terminal apparatus; used to adjust sending timing of a reference signal of the terminal apparatus; or used to adjust a random access occasion of the terminal apparatus.

However, a scheduling offset value of one apparatus is associated with a round-trip delay between the apparatus and the satellite (the relay apparatus #3). In addition, because a round-trip delay between the relay apparatus #4 and the satellite (the relay apparatus #3) is different from (for example, greater than) a round-trip delay between the terminal apparatus #1 and the satellite (the relay apparatus #3), a scheduling offset value corresponding to a terminal apparatus is different from a scheduling offset value corresponding to a relay apparatus, and different parameter values may be used as scheduling offset values. If the terminal apparatus and the relay apparatus use a same scheduling offset value, to meet scheduling delay requirements of the terminal device and the relay apparatus, a relatively large scheduling offset value needs to be used, which greatly increases a scheduling delay. By using different parameter values as scheduling offset values, a scheduling delay of an apparatus with a relatively small round-trip delay can be reduced.

It can be learned from the analysis that both the terminal apparatus #1 and the relay apparatus #4 can receive the broadcast message of the cell #1. If the broadcast message includes a plurality of parameters (for example, the scheduling offset value corresponding to the terminal apparatus and the scheduling offset value corresponding to the relay apparatus), two types of terminals (the relay apparatus #4-MT and the terminal apparatus #1) cannot identify specific parameters that are currently used by the terminals.

Based on the foregoing problem, embodiments of this application provide several possible implementations, so that the relay apparatus (or the relay apparatus-MT) and the terminal apparatus can identify specific parameters (for example, a scheduling offset value) that need to be used by the relay apparatus and the terminal apparatus, thereby improving a communication success rate. In these implementations, the relay apparatus (or the relay apparatus-MT) may use the first duration (for example, identified as △T) as the scheduling offset value of the relay apparatus. The value of the first duration is equal to the scheduling offset value corresponding to the relay apparatus. In this way, when the relay apparatus performs some operations with the network apparatus as an MT, the first duration is used as the scheduling offset value corresponding to the relay apparatus, so that information transmission can better match the information round-trip delay between the relay apparatus and the network apparatus, thereby improving communication performance. In this embodiment of this application, the first duration is not used only as the scheduling offset value of the relay apparatus, and the first duration may also be used for another function. For example, the relay apparatus may determine, based on the first duration, a resource for forwarding the second information. For other content of the scenario in FIG. 9, refer to the related descriptions in FIG. 2A. Details are not repeatedly described. The following describes the two scenarios by using Example 1 and Example 2.

### Example 1: The relay apparatus (or the relay apparatus-MT) and the terminal apparatus are in a same cell.

The network apparatus may broadcast (or multicast, or unicast) one or more parameters. Because the relay apparatus and the terminal apparatus are in the same cell, the relay apparatus and the terminal apparatus receive a same set of parameters (for example, a same broadcast message). In this case, the relay apparatus and the terminal apparatus may select parameters to be used based on types of the relay apparatus and the terminal apparatus. For example, the relay apparatus may determine, based on the type of the relay apparatus, that the scheduling offset value corresponding to the relay apparatus needs to be selected for use. For example, when determining that at least one of the following conditions is met, the relay apparatus determines that the scheduling offset value corresponding to the relay apparatus needs to be selected as the scheduling offset value of the relay apparatus for use: the relay apparatus determines that the relay apparatus has a part of capabilities of the network apparatus, the relay apparatus determines that the relay apparatus has a capability of serving as a relay, or the relay apparatus determines that the relay apparatus is a device of a network apparatus and a mobile terminal. For another example, the terminal apparatus may determine, based on the type of the terminal apparatus, that the scheduling offset value corresponding to the terminal apparatus needs to be selected as the scheduling offset value of the terminal apparatus for use. For example, when determining that at least one of the following conditions is met, the terminal apparatus determines that the scheduling offset value corresponding to the terminal apparatus needs to be selected as the scheduling offset value of the terminal apparatus for use: the terminal apparatus determines that the terminal apparatus is a common terminal. For another example, the terminal apparatus determines that the terminal apparatus does not have a capability of the network apparatus. For another example, the terminal apparatus determines that the terminal apparatus does not have a capability of serving as a relay. For another example, the terminal apparatus determines that the terminal apparatus is a mobile terminal. For another example, the terminal apparatus determines that the terminal apparatus is a handheld terminal or a directional terminal.

With reference to FIG. 9, for example, the relay apparatus #3 (or the network apparatus) sends information indicating the first duration. The information indicating the first duration may include, for example, indication information of the first duration, or a scheduling offset value and an adjustment value. △T represents the first duration. The scheduling offset value may be denoted as K_{offset}, and K_{offset} may be replaced with a scheduling offset value corresponding to the terminal apparatus. The indication information of the first duration may be △T. Alternatively, the first duration is associated with the scheduling offset value and the adjustment value. For example, First duration = (K_{offset} + Adjustment value), or First duration = (Koffset - Adjustment value). The adjustment value may be predefined in a protocol, or may be a value indicated by the network apparatus to the relay apparatus. Alternatively, the first duration may be another calculation formula such as a product of K_{offset} and the adjustment value. For content of this part, refer to the foregoing related descriptions. Details are not described again.

Based on the foregoing example, the relay apparatus #3 (or the network apparatus) may send a value of K_{offset} and the adjustment value, or may be replaced with a value of K_{offset} and △T. In this embodiment of this application, a message used to carry any one or more of K_{offset}, an adjustment value, or △T is, for example, a broadcast message, a multicast message, or a unicast message, for example, a SIB message, an RRC message, or MAC CE signaling. Any one or more of K_{offset}, the adjustment value, or △T may be carried in a same piece of signaling, or may be carried in a plurality of pieces of signaling.

The relay apparatus (or the relay apparatus-MT) determines, based on the type of the relay apparatus, that the relay apparatus needs to use a value of △T (△T may be directly received, or △T is obtained through calculation based on K_{offset} and an adjustment value, and reference may be made to the foregoing formula) as the scheduling offset value corresponding to the relay apparatus for use. For a related use solution, refer to the foregoing related descriptions that the terminal apparatus uses the scheduling offset value corresponding to the terminal apparatus. Details are not repeatedly described. The terminal apparatus determines, based on the type of the terminal apparatus, that the terminal apparatus needs to use K_{offset} as the scheduling offset value corresponding to the terminal apparatus. It can be learned that the solution provides a solution for the relay apparatus (or the relay apparatus-MT) and the terminal apparatus that are located in the same cell, so that the relay apparatus and the terminal apparatus select appropriate parameters as scheduling offset values of the relay apparatus and the terminal apparatus, thereby improving communication performance.

### Example 2: The relay apparatus (or the relay apparatus-MT) and the terminal apparatus are not in a same cell.

In this example, a network apparatus of a cell in which the relay apparatus is located may broadcast (or multicast, or unicast), to the cell in which the relay apparatus is located, a parameter corresponding to the relay apparatus. The relay apparatus may select a to-be-used parameter based on the type of the relay apparatus. For example, the relay apparatus may select, based on the type of the relay apparatus, the scheduling offset value corresponding to the relay apparatus for use. Refer to related content in Example 1. Details are not repeatedly described. A network apparatus of a cell in which the terminal apparatus is located may broadcast (or multicast, or unicast), to the cell in which the terminal apparatus is located, a parameter corresponding to the relay apparatus. The terminal apparatus may use a parameter sent by the network apparatus, or the terminal apparatus selects a to-be-used parameter based on the type of the terminal apparatus. For details, refer to related content in Example 1. Details are not repeatedly described.

For example, the network apparatus of the cell in which the relay apparatus is located may send a message to the cell in which the relay apparatus is located. The message includes the value of K_{offset} and the adjustment value, or the message includes △T. The message is, for example, an SIB message, an RRC message, or MAC CE signaling. The relay apparatus (or the relay apparatus-MT) determines, based on the type of the relay apparatus, that the relay apparatus selects to use △T (△T may be directly received, or △T is obtained through calculation based on K_{offset} and an adjustment value, and reference may be made to the foregoing formula) as the scheduling offset value corresponding to the relay apparatus for use. For a related use solution, refer to the foregoing related descriptions that the terminal apparatus uses the scheduling offset value corresponding to the terminal apparatus. Details are not repeatedly described.

For another example, the network apparatus of the cell in which the terminal apparatus is located may send a message to the cell in which the terminal apparatus is located. The message includes the value of K_{offset}. The message is, for example, an SIB message, an RRC message, or MAC CE signaling. The terminal apparatus uses K_{offset} as a scheduling offset value corresponding to the terminal apparatus. Alternatively, the terminal apparatus determines, based on a type of the terminal apparatus, that the terminal apparatus selects K_{offset} as a scheduling offset value corresponding to the terminal apparatus for use.

It can be learned that, in these solutions, the relay apparatus (or the relay apparatus-MT) and the terminal apparatus each may select an appropriate parameter as the scheduling offset value of itself, thereby improving communication performance.

It may be understood that, to implement the functions in the foregoing embodiments, the terminal apparatus, the relay apparatus, and the network apparatus may include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

Based on the content shown in FIG. 1A, FIG. 1B, FIG. 1C, FIG. 2A, FIG. 2B, FIG. 2C, FIG. 2D, FIG. 2E, FIG. 3, FIG. 4, FIG. 5, FIG. 6, FIG. 7A and FIG. 7B, FIG. 10, and FIG. 11, and the foregoing other content, FIG. 10 and FIG. 11 each are a diagram of a possible structure of a communication apparatus according to an embodiment of this application. These communication apparatuses may be configured to implement functions of the terminal apparatus, the relay apparatus, or the network apparatus in the foregoing method embodiment in FIG. 4, and therefore can also achieve beneficial effects of the foregoing method embodiment. In embodiments of this application, the communication apparatus may be the terminal device, the network device (for example, a RAN node deployed on the ground), or the satellite device shown in FIG. 1A, FIG. 1B, FIG. 1C, FIG. 2A, FIG. 2B, FIG. 2C, FIG. 2D, or FIG. 2E. Alternatively, the communication apparatus may be a chip (or a chip system) used in the terminal device, the network device, or the chip (or the chip system) of the satellite device shown in FIG. 1A, FIG. 1B, FIG. 1C, FIG. 2A, FIG. 2B, FIG. 2C, FIG. 2D, or FIG. 2E. In embodiments of this application, when the communication apparatus is configured to implement functions of the relay apparatus in FIG. 4, the communication apparatus may be the network device (for example, a RAN node deployed on the ground), or the satellite device shown in FIG. 1A, FIG. 1B, FIG. 1C, FIG. 2A, FIG. 2B, FIG. 2C, FIG. 2D, or FIG. 2E. Alternatively, the communication apparatus may be a chip (or a chip system) used in the network device, or the chip (or the chip system) of the satellite device shown in FIG. 1A, FIG. 1B, FIG. 1C, FIG. 2A, FIG. 2B, FIG. 2C, FIG. 2D, or FIG. 2E.

As shown in FIG. 10, a communication apparatus 1300 includes a processing unit 1310 and a transceiver unit 1320. The transceiver unit 1320 may also be referred to as a communication unit. The transceiver unit 1320 may include a sending unit and a receiving unit.

When the communication apparatus 1300 is configured to implement functions of the relay apparatus in the method embodiment shown in FIG. 4, in a possible implementation, the transceiver unit 1320 is configured to: receive first information in a first time unit, receive information indicating a first duration, receive second information, and send the second information in a second time unit.

When the communication apparatus 1300 is configured to implement functions of the relay apparatus in the method embodiment shown in FIG. 4, in a possible implementation, the transceiver unit 1320 is configured to receive third information.

When the communication apparatus 1300 is configured to implement functions of the relay apparatus in the method embodiment shown in FIG. 4, in a possible implementation, the transceiver unit 1320 is configured to send fourth information to a network apparatus.

When the communication apparatus 1300 is configured to implement functions of the network apparatus in the method embodiment shown in FIG. 4, in a possible implementation, the transceiver unit 1320 is configured to: send first information to a relay apparatus in a first time unit, send information indicating a first duration, and receive second information.

When the communication apparatus 1300 is configured to implement functions of the network apparatus in the method embodiment shown in FIG. 4, in a possible implementation, the transceiver unit 1320 is configured to send third information.

When the communication apparatus 1300 is configured to implement functions of the network apparatus in the method embodiment shown in FIG. 4, in a possible implementation, the transceiver unit 1320 is configured to receive fourth information. The processing unit 1310 is configured to determine the third information based on the fourth information.

For more detailed descriptions of the processing unit 1310 and the transceiver unit 1320, refer to related descriptions in the method embodiment shown in FIG. 4.

As shown in FIG. 11, a communication apparatus 1400 includes a processor 1410 and an interface circuit 1420. The processor 1410 and the interface circuit 1420 are coupled to each other. It can be understood that the interface circuit 1420 may be a transceiver or an input/output interface. The input/output interface is configured to input and/or output information. Output may be understood as send, and input may be understood as receive. Optionally, the communication apparatus 1400 may further include a memory 1430, configured to: store instructions executed by the processor 1410, store input data needed for running instructions by the processor 1410, or store data generated after the processor 1410 runs instructions.

When the communication apparatus 1400 is configured to implement the method shown in FIG. 4, the processor 1410 is configured to implement functions of the processing unit 1310, and the interface circuit 1420 is configured to implement functions of the transceiver unit 1320.

When the communication apparatus is a chip used in a relay apparatus, a chip of the relay apparatus implements functions of the relay apparatus in the foregoing method embodiment. That the chip of the relay apparatus receives information from a base station may be understood as that the information is first received by another module (for example, a radio frequency module or an antenna) in the relay apparatus, and then sent by the module to the chip of the relay apparatus. That the chip of the relay apparatus sends information to a base station may be understood as that the information is first sent to another module (for example, a radio frequency module or an antenna) in the relay apparatus, and then sent to the base station by using the module.

When the communication apparatus is a chip used in a base station, the chip in the base station implements functions of the network apparatus in the foregoing method embodiment. That the chip in the base station receives information from a relay apparatus may be understood as that the information is first received by another module (for example, a radio frequency module or an antenna) in the base station, and then sent to the chip in the base station through the module. That the chip in the base station sends information to a relay apparatus may be understood as that the information is delivered to another module (for example, a radio frequency module or an antenna) in the base station, and then sent to the relay apparatus through the module.

Based on a same concept, an embodiment of this application further provides a computer-readable storage medium. The storage medium stores a computer program or instructions. When the computer program or the instructions are executed by a communication apparatus, the method shown in FIG. 4 is implemented.

Based on a same concept, an embodiment of this application further provides a computer program product. The computer program product stores a computer program. The computer program includes program instructions. When the program instructions are executed by a computer, the method shown in FIG. 4 may be implemented.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entity A and the entity B herein each may be a RAN node or a terminal, or may be a module in a RAN node or a terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or a terminal as discrete components.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions of different embodiments are consistent and may be mutually referenced, and technical features in different embodiments may be combined based on an internal logical relationship thereof to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers (for example, numeric numbers such as "first" and "second", or letter numbers such as "A1" and "A2") in embodiments of this application are merely for distinguishing for ease of description, and are not intended to limit the scope of embodiments of this application. Sequence numbers of the foregoing processes do not mean an execution sequence, and the execution sequence of the processes should be determined based on functions and internal logic of the processes.

## Claims

1. A communication method, wherein the method is applicable to a relay apparatus, and the method comprises:
receiving first information in a first time unit, wherein the first information indicates a resource for information sent by the relay apparatus;
receiving information indicating a first duration, wherein the first duration is associated with a round-trip delay of signal transmission between the relay apparatus and the network apparatus;
receiving second information; and
sending the second information in a second time unit, wherein the second time unit is determined based on the first duration and the first time unit.

2. The method according to claim 1, wherein the resource indicating the information sent by the relay apparatus comprises at least one of the following:
information indicating a time domain start location of the second time unit;
information indicating a length of a time domain resource occupied by the second time unit; and
information indicating a frequency domain resource occupied by the information sent by the relay apparatus.

3. The method according to claim 1 or 2, wherein the first information further comprises at least one of the following:
indicating a sending address corresponding to the information sent by the relay apparatus;
indicating a sending path corresponding to the information sent by the relay apparatus;
indicating a sending direction corresponding to the information sent by the relay apparatus, wherein the sending direction comprises an uplink transmission direction or a downlink transmission direction;
indicating a sending manner of the information sent by the relay apparatus, wherein the sending manner comprises transparent forwarding or regenerative forwarding; and
indicating a frequency corresponding to the information sent by the relay apparatus.

4. The method according to any one of claims 1 to 3, wherein the first duration is less than, greater than, or equal to the round-trip delay of signal transmission between the relay apparatus and the network apparatus.

5. The method according to any one of claims 1 to 4, wherein the second time unit is further determined based on at least one of the following:
a value of K, wherein the value of K is associated with a delay of processing uplink information by the relay apparatus and/or a delay of processing downlink information by the relay apparatus; and
a time unit offset value, wherein the first information further indicates the time unit offset value.

6. The method according to claim 5, wherein a quantity of time units between the second time unit and a third time unit is determined based on a sum of the first duration, the value of K, and the time unit offset value; and
the third time unit is a time domain resource for uplink transmission, and an index value of the third time unit is equal to that of the first time unit.

7. The method according to any one of claims 1 to 6, wherein the method further comprises:
receiving third information, wherein the third information is used for determining an updated first duration, the updated first duration is used by the relay apparatus to determine a time unit of the sent information, and the updated first duration is associated with the round-trip delay between the relay apparatus and the network apparatus.

8. The method according to claim 7, wherein the third information comprises information indicating the updated first duration, or information indicating a difference between the first duration and the updated first duration.

9. The method according to claim 7 or 8, wherein before receiving the third information, the method further comprises:
sending fourth information to the network apparatus, wherein the fourth information indicates location information of the relay apparatus and/or a timing advance TA corresponding to the relay apparatus, and the third information is determined based on the fourth information.

10. The method according to any one of claims 1 to 9, wherein the first duration is determined based on a scheduling offset value.

11. The method according to any one of claims 1 to 10, wherein the first information indicates at least one fourth time unit;
the second time unit belongs to a fourth time unit that meets a first condition;
the first condition comprises: a quantity of time units between a time domain start location of the fourth time unit and the third time unit is greater than or equal to the first duration, or the sum of the first duration, the value of K, and the time unit offset value; and
the third time unit is a time domain resource for uplink transmission, and the index value of the third time unit is equal to that of the first time unit.

12. The method according to claim 11, wherein before receiving the first information in the first time unit, the method further comprises:
receiving information used to configure at least one resource set, wherein the at least one resource set comprises a first resource set, the first resource set comprises the at least one fourth time unit, and the first information is used to activate the first resource set.

13. The method according to claim 12, wherein the information used to configure the at least one resource set is carried in radio resource control RRC signaling, and the first information is carried in medium access control control element MAC CE signaling.

14. The method according to claim 11, wherein the first information is carried in RRC signaling.

15. The method according to any one of claims 1 to 14, wherein the first duration is further used for at least one of the following content:
used to adjust sending timing of information of the relay apparatus; used to adjust sending timing of feedback information of the relay apparatus; used to adjust sending timing of a reference signal of the relay apparatus; or used to adjust a random access occasion of the relay apparatus.

16. The method according to any one of claims 1 to 15, wherein the information indicating the first duration comprises:
indication information of the first duration; or
a scheduling offset value and an adjustment value, wherein the first duration is associated with the scheduling offset value and the adjustment value.

17. A communication method, wherein the method is applicable to a network apparatus, and the method comprises:
sending first information in a first time unit to a relay apparatus, wherein the first information indicates a resource for information sent by the relay apparatus;
sending information indicating a first duration, wherein the first duration is associated with a round-trip delay of signal transmission between the relay apparatus and the network apparatus, and the first duration is used by the relay apparatus to determine a time unit of the sent information; and
receiving second information, wherein the second information is sent by the relay apparatus in a second time unit, and the second information is received by the relay apparatus from a terminal apparatus or another relay apparatus.

18. The method according to claim 17, wherein the resource indicating the information sent by the relay apparatus comprises at least one of the following:
information indicating a time domain start location of the second time unit;
information indicating a length of a time domain resource occupied by the second time unit; and
information indicating a frequency domain resource occupied by the information sent by the relay apparatus.

19. The method according to claim 17 or 18, wherein the first information further comprises at least one of the following:
indicating a sending address corresponding to the information sent by the relay apparatus;
indicating a sending path corresponding to the information sent by the relay apparatus;
indicating a sending direction corresponding to the information sent by the relay apparatus, wherein the sending direction comprises an uplink transmission direction or a downlink transmission direction;
indicating a sending manner of the information sent by the relay apparatus, wherein the sending manner comprises transparent forwarding or regenerative forwarding; and
indicating a frequency corresponding to the information sent by the relay apparatus.

20. The method according to any one of claims 17 to 19, wherein the first duration is less than, greater than, or equal to the round-trip delay of signal transmission between the relay apparatus and the network apparatus.

21. The method according to any one of claims 17 to 20, wherein the second time unit is further determined based on at least one of the following:
a value of K, wherein the value of K is associated with a delay of processing uplink information by the relay apparatus and/or a delay of processing downlink information by the relay apparatus; and
a time unit offset value, wherein the first information further indicates the time unit offset value.

22. The method according to claim 21, wherein a quantity of time units between the second time unit and a third time unit is determined based on a sum of the first duration, the value of K, and the time unit offset value; and
the third time unit is a time domain resource for uplink transmission, and an index value of the third time unit is equal to that of the first time unit.

23. The method according to any one of claims 17 to 22, wherein the method further comprises:
sending third information, wherein the third information is used for determining an updated first duration, the updated first duration is used by the relay apparatus to determine the time unit of the sent information, and the updated first duration is associated with the round-trip delay between the relay apparatus and the network apparatus.

24. The method according to claim 23, wherein the third information comprises information indicating the updated first duration, or information indicating a difference between the first duration and the updated first duration.

25. The method according to claim 23 or 24, wherein before sending the third information, the method further comprises:
receiving fourth information, wherein the fourth information indicates location information of the relay apparatus and/or a timing advance TA corresponding to the relay apparatus; and
determining the third information based on the fourth information.

26. The method according to any one of claims 17 to 25, wherein the first duration is determined based on a scheduling offset value.

27. The method according to any one of claims 17 to 26, wherein the first information indicates at least one fourth time unit;
the second time unit belongs to a fourth time unit that meets a first condition;
the first condition comprises: a quantity of time units between a time domain start location of the fourth time unit and the third time unit is greater than or equal to the first duration, or the sum of the first duration, the value of K, and the time unit offset value; and
the third time unit is a time domain resource for uplink transmission, and the index value of the third time unit is equal to that of the first time unit.

28. The method according to claim 27, wherein before sending the first information in the first time unit to the relay apparatus, the method further comprises:
sending information used to configure at least one resource set, wherein the at least one resource set comprises a first resource set, the first resource set comprises the at least one fourth time unit, and the first information is used to activate the first resource set.

29. The method according to claim 28, wherein the information used to configure the at least one resource set is carried in radio resource control RRC signaling, and the first information is carried in medium access control control element MAC CE signaling.

30. The method according to claim 27, wherein the first information is carried in RRC signaling.

31. The method according to any one of claims 17 to 30, wherein the first duration is further used for at least one of the following content:
used to adjust sending timing of information of the relay apparatus; used to adjust sending timing of feedback information of the relay apparatus; used to adjust sending timing of a reference signal of the relay apparatus; or used to adjust a random access occasion of the relay apparatus.

32. The method according to any one of claims 17 to 31, wherein the information indicating the first duration comprises:
indication information of the first duration; or
a scheduling offset value and an adjustment value, wherein the first duration is associated with the scheduling offset value and the adjustment value.

33. A communication apparatus, comprising a module configured to perform the method according to any one of claims 1 to 16 or a module configured to perform the method according to any one of claims 17 to 32.

34. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 16 or the method according to any one of claims 17 to 32 by using a logic circuit or by executing code instructions.

35. A communication apparatus, comprising a processor, wherein the processor is configured to implement the method according to any one of claims 1 to 16 or the method according to any one of claims 17 to 32 by using a logic circuit or by executing code instructions.

36. A computer-readable storage medium, wherein the storage medium stores a computer program or instructions, and when the computer program or the instructions are executed by a communication apparatus, the method according to any one of claims 1 to 16 or the method according to any one of claims 17 to 32 is implemented.

37. A computer program product, wherein the computer program product stores a computer program, the computer program comprises program instructions; and when the program instructions are executed by a computer, the computer is caused to perform the method according to any one of claims 1 to 16 or the method according to any one of claims 17 to 32.
